**Europäisches Patentamt**

**European Patent Office**

**Office européen des brevets**

(19)

(11) **EP 1 462 677 A1**

(12) **EUROPÄISCHE PATENTANMELDUNG**
veröffentlicht nach Art. 158 Abs. 3 EPÜ

(43) Veröffentlichungstag:
29.09.2004 Patentblatt 2004/40

(51) Int Cl.⁷: **F16H 25/06**

(21) Anmeldenummer: 01985946.1

(86) Internationale Anmeldenummer:
**PCT/RU2001/000478**

(22) Anmeldetag: **13.11.2001**

(87) Internationale Veröffentlichungsnummer:
**WO 2003/042580 (22.05.2003 Gazette 2003/21)**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Joint Stock Company" Tomsk Transmission Systems"**
**Tomsk, 634009 (RU)**

(72) Erfinder:
• **STANOVSKOY, Viktor Vladimirovich**
**Tomsk, 634063 (RU)**
• **REMNEVA, Tatiana Andreevna**
**Tomsk, 634028 (RU)**

(74) Vertreter: **Jeck, Anton, Dipl.-Ing.**
**Patentanwalt,**
**Klingengasse 2**
**71665 Vaihingen/Enz (DE)**

(54) **MIT EINER TAUMELSCHEIBE VERSEHENE KRAFTÜBERTRAGUNGSEINHEIT (VARIANTEN) UND DARAUF BASIERENDER DIFFERENZGESCHWINDIGKEITSWANDLER (VARIANTEN)**

(57)    Die Erfindung bezieht sich auf eine Vorrichtung zur Übertragung einer Drehung mit einer Umwandlung (Transformation) der Geschwindigkeit, die auf einem Mechanismus mit einer Taumelscheibe aufgebaut ist. Die Vorrichtung enthält einander umfassende Rahmen (42, 43), von denen einer (43) zwei unabhängige Bewegungen ausführen kann, nämlich eine Drehung um die eigene Achse, die zur Achse des anderen Rahmens geneigt ist, und eine Taumelbewegung, die die Taumelscheibe ausführt. Die Seitenpaarflächen des Rahmens und der Taumelscheibe sind in Form eines kugelförmigen Gürtels mit dem Mittelpunkt der Kugel im Zentrum der Taumelbewegung der Taumelscheibe ausgeführt.

An den Paarflächen des Rahmens und der Taumelscheibe sind Wälzbahnen (44, 45) vorgesehen, die über den Wälzkörper (46) ineinander eingreifen. Die Wälzbahnen an der Kontaktstelle mit den Kugeln haben gegeneinander eine Neigung, die geringer als der Winkel der Selbstverklemmung des Wälzkörpers ist. Diese Bedingung sichert das Funktionieren der Vorrichtung ohne Durchrutschen der Kugeln. Die Vorrichtung kann mit Wälzbahnen in Form eines Systems von parallel zueinander verlaufenden Ringnuten ausgeführt werden und nach dem Prinzip des Kugelreibungs- und Planetengetriebes arbeiten, in dem die Andruckkraft automatisch durch den Belastungswert geregelt wird.

Fig.20

**Beschreibung**

Erfindungsgebiet

Die Erfindung bezieht sich auf den allgemeinen Maschinenbau, und zwar auf eine Vorrichtung zur Übertragung einer Drehung mit einer Umwandlung der Geschwindigkeit und basiert auf einem Mechanismus mit einer Taumelscheibe; die Erfindung kann in Getrieben von Maschinen und Mechanismen zum Einsatz kommen.

Stand der Technik

Es sind Umwandler für die Geschwindigkeit bekannt, die unterschiedlich bezeichnet und klassifiziert werden; sie richten sich jedoch nach dem gleichen Prinzip eines Zahngetriebes mit einer Taumelscheibe.

Dazu gehört das Zahnradwellengetriebe gemäß der Patentanmeldung RF 94023896. Die dort beschriebene Drehübertragungsvorrichtung enthält eine Taumelscheibe mit einem Zahnkranz, der im Eingriff mit einem unbeweglichen Zahnrad steht. Die Taumelbewegung der Scheibe wird von einem Wellengenerator in Form eines Exzenters mit einer Druckrolle hervorgerufen. Die Taumelscheibe ist mit einer Antriebswelle durch ein räumliches (Universal-) Gelenk verbunden.

Nach dem kinematischen Schema ist das Planeten-Taumelbewegungs-Kugelgetriebe nach der SU UdssR 1414976, das Wellengetriebe mit festen Gliedern nach der SU 653458 und das Kegelwellengetriebe nach der RU 2145016 aufgebaut. Diese kinematischen Vorrichtungen (aber mit jeweiligen Unterschieden in der Ausführung der einzelnen Baugruppen) realisieren die Umwandler für die Geschwindigkeit gemäß den US-Patenten 3,525,890; 3,640,154; 4,281,566; 4,841,809; 5,562,560. Einige dieser Patente verfügen über zwei Drehübertragungsvorrichtungen, d. h., es wird ein zweistufiges Getriebe realisiert.

Alle oben beschriebenen Umwandler der Geschwindigkeit haben gemeinsame Nachteile, die durch den verwendeten Zahnradeingriff bedingt sind. In erster Linie sind es die starke Reibung und die hohen Wärmeverluste, insbesondere bei höheren Drehzahlen. Außerdem stehen nur wenige Zahnräder im Eingriff, wodurch die Größe der durch diese Mechanismen zu übertragenden Momente begrenzt wird. Einige dieser Nachteile werden von den Umwandlern der Geschwindigkeit mit Nutations- und Präzisionssystemen der Übertragung des Momentes mit einer kurvengesteuerten Verzahnung der Glieder durch Wälzkörper (US 4,175,249; US 4,563,915; SU 1427115) beseitigt. Der Differenzwandler der Geschwindigkeit mit einer Taumelscheibe gemäß dem US-Patent 4,563,915 hat eine Drehübertragungsvorrichtung, die aus drei Gliedern besteht. Die Taumelscheibe mit zwei nach dem Azimut periodisch kurvengesteuerten Elementen in Form von Kämmen und Mulden, die auf ihren gegenüberliegenden Kanten angebracht sind, ist zwischen zwei anderen Gliedern in Form von Drehkörpern untergebracht. Die kurvengesteuerten Oberflächen der Taumelscheibe wirken über Kugelketten mit den gleichen kurvengesteuerten Elementen auf den der Taumelscheibe zugewandten Oberflächen der Drehkörper zusammen. Die Kugeln werden voneinander in einer festen Winkelentfernung durch einen dünnwandigen Separator mit Öffnungen gehalten, der zwischen den zusammenwirkenden, kurvengesteuerten Elementen eingeführt ist.

Die Kämme und Mulden sind längs der Achse gerichtet und sind so aufgebaut, dass sich die Wälzelemente nach einer Sinuskurve auf der Oberfläche der gedachten Kugel mit dem Zentrum bewegen könnten, das mit dem Zentrum der Taumelscheibe (und dem Zentrum der Taumelbewegung) übereinstimmt. Bei dieser Vorrichtung werden jedoch die in einer festen Entfernung angebrachten Kugeln ständig in die kurvengesteuerten Oberflächen eingreifen und sich von den kurvengesteuerten Oberflächen loslösen, weil sich die längs der Achse gerichteten Kämme und Mulden an den Kantenoberflächen in unterschiedlichen Entfernungen von der gedachten Kugel befinden.

Dieser Nachteil ist in den US-Patenten 4,620,456 und US 5,443,428 vermieden. Die Drehübertragungsvorrichtung dieser Umwandler der Geschwindigkeit schließt auch drei Glieder ein, von denen eines die Taumelscheibe ist, und zwei andere stellen Drehkörper dar. Eine Zwischentaumelscheibe ist mindestens mit einer kurvengesteuerten Oberfläche in Form einer gebogenen Wälzbahn ausgestattet, die über eine Kugelkette in eine Wälzbahn auf einem der Drehkörper der Drehübertragungsvorrichtung eingreift. Im Patent US 4,620,456 ist die Seitenoberfläche der Taumelscheibe nach einer Kugel gebogen. Die trochoidale Wälzbahn ist entweder an der Kreuzung der Seiten- und Kantenoberflächen oder auf der Kantenoberfläche der Taumelscheibe vorgesehen. An der gegenüberliegenden Kante der Taumelscheibe sind im Fall eines einstufigen Umwandlers Mulden vorgesehen, die über eine zweite Kugelkette in die Mulden auf einem anderen Drehkörper eingreifen. Die Drehkörper sind jeweils mit der angetriebenen Welle oder mit dem Gehäuse des Umwandlers verbunden. Um die Winkelposition der Kugeln zueinander zu fixieren, wenn die Kugeln gleichzeitig über die Kämme und Mulden auf den Paarbahnen durchlaufen, ist zwischen den Paarflächen ein dünnwandiger Separator eingesetzt, in dessen Öffnungen die Kugeln untergebracht sind.

Im zweistufigen Umwandler sind auf der Taumelscheibe von beiden Seiten die epitrochoidalen Wälzbahnen mit einer unterschiedlichen Anzahl von Zähnen ausgeführt, die mit den epitrochoidalen Wälzbahnen auf dem Gehäuse- und Ausgangsteil verknüpft werden.

Die Scheibe wälzt sich gegen den Mittelpunkt der Taumelbewegung ab, der das Symmetriezentrum des Systems ist; die Kugelkette befindet sich in nutierender Bewegung, weil ihre Flächen vom Mittelpunkt der Taumelbewegung verschoben sind. Die schwingenden Bewegungen werden von den Kugeln sowohl in Achsrichtung als auch in Radialrichtung durchgeführt, d. h. während des Betriebs des Mechanismus erfolgt die Veränderung des Verschiebungswinkels der ineinander greifenden Einzelteile; dies führt zur Vibration der Hochgeschwindigkeitsmechanismen und zu den daraus resultierenden Problemen, nämlich Lärm und Verschleiß. Außerdem sind die Wälzbahnen nach den epi- und hypotrochoidalen Kurven schwer herzustellen. Da die Erfinder sich dessen bewusst waren, haben sie vorgeschlagen, alle Teile der Drehübertragungsvorrichtung aus Kunststoff herzustellen, weil sich die Wälzbahnen in schwerer Form aus Kunststoff durch Stanzen anfertigen lassen. Solche Getriebe sind für Kraftmechanismen nicht tauglich; sie können nur für Geräte, Uhren und ähnliche Erzeugnisse verwendet werden.

Im US-Patent 5,443,428 wird ein Umwandler mit der gleichen Konstruktion beschrieben, aber mit einer noch komplizierten, im Ausrechnen und Herstellen kurvengesteuerten, periodischen Oberfläche in Form von einer Vielzahl von kugelförmig angebrachten, wellenförmigen Kämmen und Mulden; diese Oberfläche wurde für die Beseitigung des Durchrutschens der Kugeln entwickelt. Zwei Kugelketten, die auf den verschiedenen Seiten der Äquatoriallinie der Kugel gegenüber dem Mittelpunkt der Kugel liegen, führen nur Winkelbewegungen aus; deshalb sind Lärm und Vibration verringert. Aber jede Kugelkette führt auf die Achse des Übertragungswinkels bezogen eine komplizierte Bewegung aus, die sich aus der Taumelbewegung im Hinblick auf den Kreuzungspunkt der Fläche der Kugelkette mit der Systemachse und aus der Planetenbewegung gegenüber der Achse des Umwandlers zusammensetzt. D. h., dass, auf die Achse bezogen, die Kugeln Radialbewegungen ausführen, wodurch es weiterhin zum Lärm und zur Vibration kommen kann. Außerdem machen die besonderen Anforderungen an die Form der kurvengesteuerten Oberfläche den Umwandler für den Einsatz eines Kraftgetriebes für die Massenverwendung und -fertigung wenig tauglich.

Durch die US 1,748,907 ist ein Umwandler der Geschwindigkeit bekannt, dessen Drehübertragungsvorrichtung aus zwei Drehkörpern besteht, nämlich einem sphärischen Kopfstück, das von der Taumelscheibe umschlossen wird. Auf der inneren kugelförmigen Fläche der Taumelscheibe sind Mulden längs der Äquatoriallinie angeordnet. Das kugelförmige Kopfstück ist mit einer geschlossenen, längs der Achse periodisch gebogenen Wälzbahn auf ihrer externen Seitenfläche im Äquatorialbereich der Kugel ausgeführt. In den Mulden befinden sich Kugeln, die im ständigen Eingriff mit der gebogenen Wälzbahn stehen. In dieser Drehübertragungsvorrichtung fällt der Mittelpunkt der Taumelbewegung der Kugelkette mit dem Mittelpunkt der Taumelbewegung der Taumelscheibe zusammen; deshalb wird die Kugelkette nur an der Taumelbewegung teilnehmen, und dementsprechend sind die Anforderungen an die Form der Ausführung der gebogenen Wälzbahn bedeutend vermindert. Der Hauptnachteil des Umwandlers sind die beträchtlichen Verluste wegen der Reibung beim Schlupf der Kugeln in den Mulden auf der Taumelscheibe.

Der Lösung der Aufgabe, eine Drehübertragungsvorrichtung zu schaffen, in der Wälzkörper auf periodischen Bahnen ausschließlich durch reines Wälzen ohne Gleitreibung laufen, ist die Erfindung gemäß der Patentanmeldung WO08201043 gewidmet; diese Erfindung wurde gemäß der vorliegenden Erfindung als Prototyp für eine der Varianten der Drehübertragungsvorrichtung ausgewählt. In der genannten Patentanmeldung ist eine aus zwei Wälzkörpern bestehende Drehübertragungsvorrichtung beschrieben; diese Vorrichtung enthält einen Rahmen und eine Taumelscheibe, die einander umfassende kugelförmig ausgebildete Paarflächen aufweisen. Im Äquatorialbereich der kugelförmigen Flächen sind periodische Wälzbahnen vorgesehen, von denen mindestens eine geschlossen und wellenförmig gebogen ist. Die andere Wälzbahn kann in Form eines Systems von auf einer Kreislinie verteilten Nuten ausgebildet werden, die nach Meridianen der Kugel ausgerichtet sind. Im Eingriff mit den Wälzbahnen befinden sich Eingriffselemente in Form von Wälzkörpern. Für die Wälzkörper-Kugeln unterscheidet sich die Anzahl der Perioden der Wälzbahnen um 1 von der Anzahl, die durch 4 teilbar ist; die Anzahl der Perioden der Wälzbahnen der Taumelscheibe und des Rahmens unterscheidet sich um 2. Der Differenzwandler der Geschwindigkeit auf der Basis dieser Drehübertragungsvorrichtung enthält eine erste und eine zweite Welle sowie ein Gehäuse. Die Taumelscheibe ist mit einem dieser Elemente durch ein Glied, das die Wälzbewegung in eine Drehbewegung umwandelt, sowie mit einem anderen Element durch ein Glied verbunden, das die Drehung der Taumelscheibe unabhängig von der Wälzbewegung überträgt. Ein drittes Element des Umwandlers ist unmittelbar mit dem Rahmen gekoppelt. Das reine Wälzen der Kugeln auf den Wälzbahnen wird in dieser Erfindung durch zwei Verfahren erreicht. In der Drehübertragungsvorrichtung mit den Meridiannuten werden sie auf dem äußeren umfassenden Element ausgeführt, indem die Differenz im Abstand von der Kontaktstelle der Kugeln mit dem Außen- und Innenteil bis zum Zentrum der Kugel die unterschiedliche Strecke kompensiert, die die Kugel zurückläuft. Das zweite Verfahren besteht in der Veränderung der Form des Querschnitts der Bahnen beim Aufstieg und Abstieg.

Dabei ändert sich der Nutzwälzradius auf den verschiedenen Strecken der Wälzbahn, und damit wird der Weg ausgerichtet, der die Kugel auf der Wälzbahn in Bezug auf unterschiedliche Stirnsteilheit zurücklegt. Auf diese Weise wird das Ziel durch das Ausrichten des Wegs erreicht, den die Kugel in Bezug auf die beiden Wälzbahnen in der gleichen Zeit durchläuft. Wie aber Untersuchungen gezeigt haben, ist diese Bedingung nicht ausreichend, um die Kugeln beim Zusammenwirken mit den Wälzbahnen nur rollen zu lassen, wobei ihr Durchrutschen ausgeschlossen wird.

Außerdem hat der Prototyp wie jeder der oben beschriebenen Umwandler der Geschwindigkeit mit einer Taumelscheibe ein unbewegliches Gehäuse, mit dem in jeder konkreten Konstruktion ein völlig konkretes Teil verbunden ist; die Drehübertragungsvorrichtung hat ein Innenvolumen, das durch das Gehäuse begrenzt ist. Der Umwandler mit dem eigenen Gehäuse wird in der Regel nicht in die Antriebsmechanismen eingebaut; es wird draußen angebracht und zusammengestellt, wodurch die Abmessungen der Vorrichtung insgesamt vergrößert werden. Die Aufgabe der Erfindung ist somit die Entwicklung einer Drehübertragungsvorrichtung und eines Umwandlers für die Geschwindigkeit, die beide universal aufgebaut sind, einfach zu fertigen sind, ein minimales Gewicht und minimale Abmessungen aufweisen und in verschiedene Maschinen und Mechanismen leicht einzubauen sind.

Die für die Erfindung gefundene Bedingung des Wälzens der Kugel erwies sich nicht nur für die Drehübertragungsvorrichtung mit periodischen Wälzbahnen als nützlich. Die Anwendung in Reibungs- und Planetenübertragungsvorrichtungen hat es möglich gemacht, eine Reihe von einfachsten Drehübertragungsvorrichtungen zu schaffen, die den wichtigsten Nachteil aller Reibungsgetriebe nicht besitzen, und zwar das Entstehen des Durchrutschens bei einem Verschluss der Teile.

Die Drehübertragungsvorrichtung der bekannten Reibungs- und Planetenkugelgetriebe (SU 844863, SU 12294B4, RU 2010141) enthält zwei Drehkörper mit Wälzbahnen, zwischen denen in den Sitzen des Separators die Wälzkörperkugeln angebracht sind. Einer der Drehkörper ist mit einer Eingangswelle verbunden, während der andere mit einem Gehäuse oder einer anderen Welle verbunden ist; mit der Eingangswelle des Umwandlers der Geschwindigkeit ist der Separator verknüpft, der die Orbitalbewegung der Kugel in eine Drehbewegung der Ausgangswelle umwandelt.

Bei der Einfachheit der Konstruktion besteht das Hauptproblem der Reibungs- und Planetenkugelgetriebe darin, dass ein Andrucksmechanismus nötig ist, der dem Durchrutschen der Kugel bei der Erhöhung des Übertragungsmoments oder bei Verschleiß der Kugeln und der Wälzbahnen im Laufe des Betriebs vorbeugt. Die Andrucksmechanismen verwenden hauptsächlich (elastische) Federelemente.

Das technische Ergebnis dieser Erfindung ist die Beseitigung des Durchrutschens von Kugeln in einer Drehübertragungsvorrichtung mit einer Taumelscheibe. Dabei wird die Aufgabe der automatischen Regelung der Andruckskraft auf die Kugel für das Reibungs- und Planetenkugelgetriebe ohne Einsatz von speziellen Mechanismen gelöst. Die Drehübertragungsvorrichtungen gemäß der Erfindung sind nicht nur Grundlage für die Differenzwandler der Geschwindigkeit, sie können auch eine selbständige Anwendung haben, z. B. In Mischanlagen. Es ist möglich, einen Mechanismus zu entwickeln, der unmittelbar die Wälzbewegungsenergie (z. B. Seewellen) in eine Drehenergie mit einer erhöhten oder verringerten Drehzahl umwandelt.

Das zusätzliche technische Ergebnis, das durch einzelne Varianten der Erfindung erreicht wird, ist seine Zusammenstellung als Lagervorrichtung ohne ein unbewegliches Gehäuse, in dem ein beliebiges Teil unbeweglich wird, nachdem der Umwandler der Geschwindigkeit an seinen Arbeitsplatz gesetzt wurde.

Es ist viel einfacher, das Wesen der Erfindung am Beispiel einer Drehübertragungsvorrichtung mit einer Taumelscheibe in Reibungs- und Planetenkugelumwandlern für die Geschwindigkeit zu verstehen; deshalb wird mit der Beschreibung dieser Variante der Erfindung begonnen.

Erfindungswesen

Gemäß der Erfindung enthält die Drehübertragungsvorrichtung zwei Drehkörper, von denen einer zwei unabhängige Bewegungen ausführen kann, und zwar ein Wälzen gegeneinander und ein Drehen um die eigene Achse, die zur Achse des anderen Drehkörpers geneigt ist, der die Taumelscheibe ist. Auf den einander zugewandten Oberflächen der Drehkörper sind geschlossene Ringwälzbahnen ausgebildet, die mit Wälzkörpern zusammenwirken, die im ständigen Kontakt mit den Wälzbahnen der beiden Drehkörper stehen. Der Neigungswinkel der Taumelscheibe ist so ausgewählt, dass die Wälzbahnen an der Kontaktstelle mit den Wälzkörpern eine Neigung zueinander aufweisen, die kleiner als der oder gleich dem Winkel der Selbstverklemmung der Wälzkörper ist. In der Praxis kann dieser Winkel für normale Konstruktionsmaterialien im Bereich von 0,1-10 Grad angesetzt werden. Bei der Erfüllung dieser Bedingung werden die Wälzkörper, z. B. Kugeln, zwischen den Flächen der Taumelscheiben und dem zweiten Drehkörper ohne Durchrutschen eingespannt, und bei der Drehung eines der Drehkörper werden sie in die Orbitalbewegung zueinander gezogen. In ihrer Orbitalbewegung wirken die Kugeln wie Kurven auf die Scheibe, wobei sie ihr Wälzen hervorrufen. Auf diese Weise realisiert die Drehübertragungsvorrichtung mit der Taumelscheibe das Prinzip eines Reibungs- und Planetenkugelgetriebes, bei dem die Planetenbewegung der Kugel in die Wälzbewegung der Scheibe und ungekehrt umgewandelt wird.

Die Neigung der Wälzbahnen zueinander gewährleistet die automatische Regelung der Andruckskraft auf die Kugel, weil sich die Kugel bei der Erhöhung der Belastung oder beim Verschleiß der Kugeln und der Wälzbahnen nach dem Azimut in den Bereich des kleineren Abstands zwischen den Wälzbahnen verschiebt.

Um den Bereich der Drehübertragungsverhältnisse zu erweitern, ist es zweckmäßig, die Querschnittprofile in derartiger Form auszuführen, dass sich die Kontaktzonen des Wälzkörpers mit den Wälzbahnen in einem unterschiedlichen Abstand von der Drehachse des Wälzkörpers befinden.

Die Drehübertragungsvorrichtung mit der Taumelscheibe kann gemäß der Erfindung in zwei Bauarten ausgeführt werden: als Scheibe und in koaxialer Bauart. Bei der ersten Modifikation sind die Drehkörper als Scheiben ausgebildet; eine der Scheiben wälzt gegen die andere. Die geschlossenen Ringbahnen sind auf den einander zugewandten Planflächen der Scheiben vorgesehen und stehen in Kontakt mit einem der Wälzkörper, der sich zwischen den Wälzbahnen befindet. Um die Bedingungen der Neigung der Wälzkörper zueinander unter einem Winkel, der kleiner als Winkel der Selbstverklemmung der Wälzkörper ist, zu erfüllen, soll der Neigungswinkel der Taumelscheibe zur Achse der Drehübertragungsvorrichtung im Bereich von 0,2 - 15 Grad liegen. Der Wälzkörper in dieser Vorrichtung stellt sich selbst an der Stelle der Kreislinie ein, an der der Abstand zwischen ihnen der Größe des Wälzkörpers entspricht.

Für die Wälzkörperkugel ist es zweckmäßig, die Seitenwände der Wälzbahnen jeder der Scheiben elastisch unbeweglich gegeneinander auszubilden. Dabei wird der Krümmungsradius des Querschnitts der Wälzbahnen veränderlich; bei einer Änderung der Belastung verschiebt sich der Kontaktpunkt der Kugel auf der Wälzbahn von der Kugeldrehachse. D. h., es wird eine Drehübertragungsvorrichtung mit einem sich automatisch ändernden Übertragungsverhältnis in Abhängigkeit von der Belastung erzielt. Bei der koaxialen Bauart der Drehübertragungsvorrichtung des Wälzkörpers sind die Drehkörper als Rahmen und Taumelscheibe, die einander umfassen, mit einander zugewandten Flächen in Form eines kugelförmigen Gürtels mit dem Mittelpunkt der Kugel im Zentrum der Taumelbewegung der Taumelscheibe ausgebildet. Im allgemeinen Fall ist jede der Wälzbahnen auf der Taumelscheibe und auf dem Rahmen in Form eines Systems von zueinander parallel verlaufenden, geschlossenen Ringnuten ausgebildet, die in Flächen liegen, die zur Drehachse des jeweiligen Teils senkrecht stehen. Als Wälzkörper dienen Kugeln, die sich an der Kreuzung der Nuten der Taumelscheibe mit den Nuten des Rahmens befinden.

In Einzelfällen kann das Nutsystem der Taumelscheibe als eine Nut dargestellt werden, die in der Äquatoriallinie der Taumelscheibe liegt und die sich mit einer oder mehreren Nuten auf dem Rahmen überschneidet. Eine Nut auf dem Rahmen ist von der Linie des Großkreises der Kugel um einen solchen Abstand verschoben, der der Hälfte des Ausschlags der Taumelscheibe gleich ist, und greift in die Nut der Taumelscheibe mit einer Kugel ein.

Um ein ausgeglichenes Kugelsystem in Bezug auf die Achse des Rahmens zu erhalten, sind auf dem Rahmen zwei Ringnuten vorhanden, die auf den verschiedenen Seiten des Kugelgroßkreises in einem Abstand angebracht sind, der der Hälfte des Ausschlags der Taumelscheibe gleich ist. Die Ringnuten des Rahmens greifen in die Nuten auf der Taumelscheibe mit zwei diametral angeordneten Kugeln ein. Das gleiche ausgeglichene Kugelsystem wird erhalten, wenn auf dem Rahmen eine Nut gemäß der Linie des Kugelgroßkreises gebildet ist und wenn in den zwei diametral liegenden Punkten der Kreuzung dieser Nut mit der Nut der Taumelscheibe zwei Kugeln angeordnet werden.

Eine Vereinigung der beiden oben beschriebenen Varianten in einer Konstruktion ist möglich. Auf dem Rahmen werden in diesem Fall drei Nuten angeordnet; eine Nut verläuft längs der Linie des Kugelgroßkreises, und die zwei anderen Nuten werden auf den verschiedenen Seiten davon in einem solchen Abstand angeordnet, der der Hälfte des Ausschlags der Taumelscheibe gleich ist. Die vier paarweise diametralen Kugeln stehen im Eingriff miteinander, die sich auf den aufeinander senkrecht stehenden Durchmessern befinden.

Möglich ist auch eine Kombination einer Nut in der Äquatorialfläche des Rahmens mit zwei Nuten auf der Taumelscheibe, die von der Äquatoriallinie der Scheibe um einen solchen Abstand verschoben sind, der der Hälfte des Ausschlags der Taumelscheibe gleich ist.

Die Nuten auf den Rahmen können sich auf den einzelnen und sich unabhängig drehenden Ringelementen des Rahmens befinden.

Nicht vergessen werden darf, dass alle oben beschriebenen Reibungs- und Planetenkugelvorrichtungen ausschließlich bei der Erfüllung der Bedingung arbeiten, die an den Neigungswinkel der Bahnen zueinander gestellt wird. Die Nichterfüllung dieser Bedingung führt zum Durchrutschen der Kugel, d. h. zu der Verletzung ihrer Reibungsbeziehungen mit den Wälzbahnen sowie zur Verletzung des Übertragungsmoments.

Die zweite Variante der Erfindung ist mit einer Drehübertragungsvorrichtung mit einer Taumelscheibe mit periodischen Wälzbahnen realisiert. Um das genannte, technische Ergebnis zu erreichen, enthält eine solche Drehübertragungsvorrichtung wie der Prototyp einen Rahmen und eine Taumelscheibe, die einander umfassen; ihre Seitenpaarflächen sind in Form eines kugelförmigen Gürtels mit dem Mittelpunkt der Kugel im Zentrum der Taumelbewegung der Taumelscheibe ausgeführt.

Im Äquatorialbereich des kugelförmigen Gürtels sind auf den einander zugewandten Flächen des Rahmens und der Taumelscheibe nach dem Azimut periodische Wälzbahnen vorgesehen, von denen mindestens eine geschlossen und in Achsrichtung wellenförmig gebogen ausgeführt ist. Die Wälzbahnen greifen ineinander über die Kette der Kugeln ein, die an der Stelle der Kreuzung von Wälzbahnen angeordnet sind. Im Unterschied zum Prototyp haben die Wälzbahnen an der Stelle des Kontakts mit den Kugeln eine Neigung, die geringer als der oder gleich dem Winkel der Selbstverklemmung der Kugel ist. Diese Bedingung wird erfüllt, wenn der Winkel der Neigung $\alpha$ der Front der periodischen Wälzbahn zum Äquator auf der Taumelscheibe und der jeweilige Winkel $\beta$ auf dem Rahmen zum Neigungswinkel $\gamma$ der Taumelscheibe in folgenden Verhältnissen stehen:

$$\alpha\text{-}\beta\text{-}\gamma \leq 10, \text{ bei } \alpha \geq \beta; \qquad (1)$$

$$\beta\text{-}\alpha\text{+}\gamma \leq 10, \text{ bei } \alpha > \beta; \qquad (2)$$

Die Winkel $\alpha$ und $\beta$ hängen von der Anzahl der Perioden und von der Amplitude der Wälzbahnen ab. Die Amplituden hängen ihrerseits vom Neigungswinkel der Taumelscheibe ab. In jedem Fall, in dem diese Werte variiert werden, kann die Erfüllung der Bedingungen (1) und (2) erreicht werden.

Im Vergleich zum Prototyp gibt es im letzten Fall die Bedingung der Auswahl der Periodenanzahl von Wälzbahnen. Die Anzahl n der Kugeln kann beliebig sein. Aber bei einer geringeren Anzahl n der Kugeln (in Grenzen von ein bis zwei Dutzend), um ein ausgeglichenes Kugelsystem zu erhalten, ist es wünschenswert, dass die Kugelanzahl gerade ist. Die Periodenzahl der Wälzbahnen $N_1$ und $N_2$ auf der Taumelscheibe und auf dem Rahmen ist mit der Anzahl der Kugeln *n* im Verhältnis $N_1 = kn \pm 1; N_2 = qn \pm 1$ verbunden, wobei *k* und *q* ganze Zahlen oder Zahlen der Art *1/m* sind, wobei *m* die Zahl ist, durch die die Kugelanzahl ohne Rest dividiert wird. Die Erweiterung des Bereichs der möglichen Zahlen $N_1$ und $N_2$ sichert nicht nur die Erweiterung des Übertragungsverhältnisses für eine Vorrichtung mit einer bestimmten Kugelanzahl, sondern erhöht die Anzahl der Kombinationen der Perioden der Wälzbahnen, bei denen die Bedingung der Selbstverklemmung der Kugeln erfüllt wird. Hierzu ist zu bemerken, dass die oben beschriebene Reibungs- und Planetenübertragungsvorrichtung der koaxialen Konfiguration im Grunde genommen ein Sonderfall mit der Anzahl $N_1 = 0$ der Perioden der Wälzbahn auf der Taumelscheibe und mit der Periodenzahl $N_2 = 1$ auf dem Rahmen ist. Die periodischen Wälzbahnen auf beiden Teilen können geschlossen und wellenförmig gebogen sein. Die Wälzbahn auf einem dieser Teile kann als nicht geschlossen ausgeführt werden und zwar in Form eines Systems der auf einer Kreislinie verteilten Nuten, die nach Meridianen der Kugeln verlaufen.

Um die Funktionsmöglichkeiten der Drehübertragungsvorrichtung zu steigern, ist der Rahmen gemäß der Mittelinie der gebogenen Wälzbahn geschnitten, wobei zwei unabhängig sich drehende Rahmenelemente gebildet werden. Die Wälzbahn auf jedem der Elemente stellt ein System von Halbwellen dar, die mit einer unterschiedlichen Periodenanzahl ausgeführt sind.

Die Differenzwandler der Geschwindigkeit auf der Basis der beschriebenen Drehübertragungsvorrichtungen enthalten drei Wellen. Die Taumelscheibe der Drehübertragungsvorrichtung ist mit einer der Wellen durch einen Mechanismus für eine unabhängige Umwandlung ihrer Wälzbewegung in eine Drehung der Welle und umgekehrt verbunden; mit der zweiten Welle ist die Taumelscheibe durch einen Mechanismus der Übertragung ihrer Drehung gegen die geneigte Achse unabhängig von ihrer Wälzbewegung verbunden; mit der dritten Welle ist unmittelbar der zweite Drehkörper der Drehübertragungsvorrichtung verbunden.

Für die Kugelreibungs- und Planeten-Drehübertragungsvorrichtungen in der Scheibenkonfiguration ist der Mechanismus für die Umwandlung der Wälzbewegung der Scheibe in eine Drehung der Welle und umgekehrt in Form einer Stirnkurve ausgebildet, die mit der Wälzscheibe über ein Lager zusammenwirkt; die zweite Welle ist das Gehäuse des Getriebes und ist mit der Taumelscheibe durch eine Verdrehsicherung verbunden.

Für die Drehübertragungsvorrichtungen der koaxialen Bauart ist es zweckmäßig, alle Wellen gleichachsig und voll herzustellen, wobei eine koaxiale Konstruktion aus einem Rahmen in Form einer Lagervorrichtung gebildet wird.

Der Umwandler mit der Drehübertragungsvorrichtung, bei der der Rahmen aus den sich unabhängig drehenden Elementen besteht, ist mit zusätzlichen Wellen ausgestattet, die unmittelbar mit diesen Elementen verknüpft sind.

Als Mechanismus für die unabhängige Umwandlung der Wälzbewegung der Scheibe in eine Drehbewegung der ersten Welle und umgekehrt kann eine schräge Kurbelwelle dienen, auf die die Taumelscheibe über das Lager gesetzt ist.

Als Mechanismus der Umwandlung der Wälzbewegung in eine Drehbewegung kann jede der Reibungs-Planeten-Kugel-Drehübertragungsvorrichtungen der koaxialen Bauart dienen, die auf der gleichen Taumelscheibe von der Seite realisiert ist, die der Hauptübertragungsvorrichtung gegenüber liegt. Als erste Welle des Umwandlers dient dann der Rahmen der Reibungs-Planeten-Vorrichtung.

Der Mechanismus der unabhängigen Übertragung der Drehung der Taumelscheibe an die zweite Welle kann in Form eines Kreuzstücks, eines Systems von flexiblen Zugstangen oder Gelenken sowie in Form eines universalen Gelenks oder eines Kegelradgetriebes ausgeführt werden.

Die Drehübertragungsvorrichtungen der koaxialen Bauart ermöglichen zweistufige Umwandler der Geschwindigkeit ohne eine wesentliche Vergrößerung der Abmessungen zu schaffen. Die Stufen können konsequent längs einer Achse angeordnet sein oder einander umfassen (koaxiale Ausführung des zweistufigen Umwandlers). Der zweistufige Umwandler koaxialer Ausführung kann seinerseits in zwei Varianten ausgeführt werden.

Nach der ersten Variante verwenden die Drehübertragungsvorrichtungen beider Stufen die gleiche Taumelscheibe. Dazu wird auf der Taumelscheibe der ersten Drehübertragungsvorrichtung von der Seite, die dieser Vorrichtung gegenüber liegt, eine Drehübertragungsvorrichtung der zweiten Stufe zusammengestellt, d. h. es wird ein System aus den einander umfassenden drei Elementen gebildet: Rahmen, Taumelscheibe und Rahmen. Die zweite Drehübertragungsvorrichtung erfüllt in diesem Fall gleichzeitig die Funktion eines Mechanismus zur Übertragung der Drehbewegung der Taumelscheibe an die Welle des Umwandlers, die unmittelbar mit dem Rahmen der Drehübertragungsvorrichtung der zweiten Stufe verknüpft ist. Als Mechanismus der Umwandlung der Wälzbewegung der Scheibe in eine Drehbewegung und umgekehrt können nicht alle oben beschriebenen Mittel eingesetzt werden, weil einige von ihnen die zweite Seitenfläche der Taumelscheibe nutzen, die in diesem Fall mit der zweiten Drehübertragungsvorrichtung besetzt ist.

Für diesen Umwandler wurde extra ein Mechanismus entwickelt, der aus zwei Hohlwellen gebildet ist, die zwischen dem Außen- und Innenrahmen des Umwandlers gelagert sind und von der Seite der gegenüberliegenden Kanten eingeführt sind. Jede der Wellen ist mit einer gleichen, schrägen Kurbel versehen. Die Taumelscheibe ist auf beiden Kurbelwellen über die Lager angeordnet.

Die Hohlwellen können auch mit Stirnkurven ausgebildet werden, die mit den Kanten der Taumelscheibe über Stützlager zusammenwirken.

Nach der zweiten Variante wird der zweistufige Umwandler aus zwei einander umfassenden, einzelnen Drehübertragungsvorrichtungen   zusammengestellt. Die Taumelscheiben der beiden Vorrichtungen sind einander zugewandt. Der Mechanismus der Umwandlung der Wälzbewegung jeder Scheibe in eine Drehbewegung stellt eine Hohlwelle dar, die zwischen den Taumelscheiben der beiden Stufen angeordnet ist; dieser Mechanismus weist Elemente an den Seitenflächen auf, die der Taumelscheibe zugewandt sind, welche die Taumelbewegung der Scheiben hervorrufen. Als Elemente können schräge Kurbeln mit der gleichen oder entgegengesetzten Neigung dienen, auf denen die Taumelscheiben über Lager angeordnet sind. Bei der gleichen Neigung der schrägen Kurbeln wälzen die Scheiben synchron. Bei der entgegengesetzten Neigung wälzen sie in der Gegenphase. Die Elemente, die die Taumelbewegung der Scheiben hervorrufen, können auch anders aufgebaut werden.

Auf den einander zugewandten Seitenflächen sind in jedem Paar Hohlwellen-Taumelscheibe eine Ringnut und ein Ringvorsprung ausgebildet, die miteinander durch zwei diametral gegenüberliegende Kugeln verknüpft sind. Die Kugeln sind zwischen den Nutwänden und dem Vorsprung von den entgegengesetzten Seiten des Vorsprungs angeordnet. Die Scheiben der beiden Stufen sind miteinander durch eine Drehübertragungsvorrichtung verbunden, so dass die Drehübertragungsvorrichtung der zweiten Stufe gleichzeitig die Funktion des Mechanismus zur Übertragung der Drehbewegung der Taumelscheibe an die Welle erfüllt, die unmittelbar mit dem Rahmen der Drehübertragungsvorrichtung der zweiten Stufe verbunden ist.

Der zweistufige Umwandler der Geschwindigkeit kann aus zwei Drehübertragsvorrichtungen koaxialer Bauart hergestellt werden, die konsequent hintereinander längs einer Achse angeordnet sind. In diesem Fall sind die Taumelscheiben der beiden Stufen durch eine Drehübertragungsvorrichtung zwischen parallelen Wellen verbunden; die Umwandlungsmechanismen der Wälzbewegung der Scheiben in die Drehung der Welle können so wie für einen einstufigen Umwandler ausgeführt werden und sollen eine synchrone Taumelbewegung der Scheiben sicherstellen. Im Ergebnis sind die Taumelscheiben während der Taumelbewegung zueinander parallel. Ein solcher Umwandler, der dem zweistufigen Umwandler gemäß dem US-Patent 5,443,428 äußerlich ähnelt, unterscheidet sich prinzipiell von diesem dadurch, dass die periodischen Wälzbahnen auf den beiden Taumelscheiben im Äquatorialbereich liegen. D. h., die Kugelketten der beiden Stufen nehmen an der Taumelbewegung in Bezug auf den Punkt teil, der in der Fläche der Kugelkette liegt, und in ihren Bewegungen fehlen die Nutationskomponenten. Dies vereinfacht bedeutend die Anforderungen an die Form und die Taumelbewegung der Ausführung der Wälzbahnen zwecks der kompletten Beseitigung von Lärm und Vibrationen.

Die Drehübertragungsvorrichtung zwischen den parallelen Wellen kann nach jedem bekannten Schema hergestellt sein. Zu diesem Zweck passt am besten der Mechanismus mit parallelen Kurbeln.

Besonders bevorzugt erweist sich aus der Sicht der Reduzierung der Reibungsverluste der Mechanismus mit parallelen Kurbeln mit Kugeleingriff wie er z. B. in den US-Patenten 4,829,851 oder 4,643,047 offenbart ist.

Die gleiche Vorrichtung kann in Form einer Welle ausgeführt werden, mit der jede der Taumelscheiben durch ein Kreuzstück verbunden ist. Für den letzten Umwandler wurde ein originaler Mechanismus für die Umwandlung der Wälzbewegung der Scheiben in eine Drehbewegung und umgekehrt entwickelt. Er weist einen Rahmen auf, der an der Achse zwischen den Stufen des Umwandlers angeordnet ist und mit einem äußeren Ringvorsprung ausgestattet ist.

Der Rahmen ist mit zwei schrägen, parallelen Kurbeln ausgebildet, auf die über Lager die Taumelscheiben gesetzt sind. Der Ringvorsprung tritt über die Grenzen der Außenrahmen der beiden Drehübertragungsvorrichtungen des Umwandlers heraus, und sein Außenkranz ist wie ein Element eines Schneckenkegelrad- oder Reibungsgetriebes ausgebildet. Ein solcher Mechanismus überträgt die Wälzbewegung der Scheiben an die Welle, deren Achse zu der gemeinsamen Achse der Drehübertragungsvorrichtungen senkrecht steht. D. h., der Umwandler der Geschwindigkeit ist zur Übertragung der Drehungen zwischen den sich kreuzenden Wellen bestimmt.

Der zweistufige Umwandler der Geschwindigkeit mit einer konsequenten Anordnung der Stufen kann mit Scheiben ausgeführt werden, die in Gegenphase wälzen. In diesem Fall sind die Taumelscheiben der beiden Stufen durch einen Mechanismus der Übertragung der Drehungen zwischen den geneigten Wellen verbunden; die Drehübertragungsvorrichtung der Wälzbewegung sichert die Gegenphasen-Taumelbewegung der Scheiben.

Es sei bemerkt, dass die gemäß der Erfindung angefertigten Umwandler der Geschwindigkeit nur bei kleineren Neigungswinkeln $\gamma$ der Taumelscheibe wirksam arbeiten. Im anderen Fall wird für die Übertragung der Drehung zwischen den Teilen, die zueinander unter einem größeren Winkel geneigt sind, ein Mechanismus benötigt, der die Gefahr des Durchrutschens der Kugeln in der Drehübertragungsvorrichtung selbst erheblich vermindert. Gleichzeitig kann sich für einige Varianten der Drehübertragungsvorrichtung der Winkel $\gamma$ für die Erfüllung der Verhältnisse (1) und (2) als ziemlich groß erweisen. Die Drehübertragungsvorrichtung mit der Taumelscheibe, bei der die beiden Rahmen die Taumelscheiben sind, umgehen diesen Widerspruch. In diesem Fall soll in den Verhältnissen (1) und (2) unter dem Winkel $\gamma$ der Neigungswinkel der Scheiben zueinander verstanden werden. Gleichzeitig hat jede Scheibe eine Achsenneigung der Drehübertragungsvorrichtung, die halb so groß ist. Dementsprechend verringert sich der Winkel in der Drehübertragungsvorrichtung.

Eine derartige Drehübertragungsvorrichtung kann mehreren Systemen von Differenzwandlern der Geschwindigkeit mit unterschiedlichen Möglichkeiten zugrunde gelegt werden. Im allgemeinen Fall enthält der Differenzwandler der Geschwindigkeit mindestens drei gleichachsige Hohlwellen, die eine koaxiale Konstruktion aus den Rahmen in Form einer Lagervorrichtung bilden, und eine Drehübertragungsvorrichtung mit zwei Taumelscheiben. Die Taumelscheiben sind mit einer der Wellen durch die Vorrichtung zur unabhängigen Umwandlung der Wälzbewegung in eine Drehbewegung und umgekehrt verbunden; mit den anderen zwei Wellen sind die Scheiben durch die Vorrichtungen zur Übertragung der Drehung zwischen den geneigten Wellen verbunden.

Die Taumelbewegung der Taumelscheiben kann in der Gegenphase hervorgerufen werden. Der Umwandler der Geschwindigkeit wird in diesem Fall analog zum Umwandler mit einer Taumelscheibe arbeiten, nur wird der Neigungswinkel zwischen den Scheiben, der die Winkeleigenschaften der Wälzbahnen bestimmt, der Summe von Winkeln der Taumelbewegung jeder Taumelscheibe gleich sein, wobei der vorherige Neigungswinkel der Scheiben zueinander beibehalten wird. Dies vereinfacht die Anforderungen an die Vorrichtung zur Umwandlung der Wälzbewegung von Scheiben in Drehbewegungen und verbessert die Bedingungen für ihren Betrieb. Gleichzeitig vereinfacht die Verringerung des Taumelbewegungswinkels, d. h. des Neigungswinkels jeder Scheibe zur Umwandlerachse, die Anforderungen an die Vorrichtungen zur Übertragung der Drehung zwischen den geneigten Wellen und erlaubt ihnen, noch ein höheres Moment bei weiteren gleichen Bedingungen zu übertragen.

Die Vorrichtung zur Umwandlung der Wälzbewegung von Scheiben kann in diesem Fall in Form von zwei koaxial miteinander verbundenen Hohlwellen ausgeführt werden, von denen eine außerhalb der Taumelscheibe und die andere innerhalb der Taumelscheibe angeordnet ist. In jedem Paar Hohlwelle-Taumelscheibe sind auf ihren einander zugewandten Flächen die Wälzbahn und der Ringvorsprung angeordnet, die miteinander durch zwei diametral gegenüberliegende Kugeln verknüpft sind, die zwischen den Nutwänden und dem Vorsprung auf dessen gegenüberliegenden Seiten liegen. Die Kugeln sind in jedem Paar so angeordnet, dass die Scheiben eine gegenüberliegende Neigung aufweisen.

Ein derartiges Ergebnis kann erreicht werden, wenn auf den den Taumelscheiben zugewandten Flächen der miteinander verbundenen Hohlwellen schräge Kurbeln mit einer Gegenneigung vorgesehen sind, die mit den Taumelscheiben über Lager zusammenwirken.

Um die Funktionsmöglichkeiten des Umwandlers zu erweitern, ist es zweckmäßig, die Vorrichtung zur Umwandlung der Wälzbewegung von Scheiben in eine Drehung der Welle aus zwei einzelnen, voneinander unabhängigen Elementen zu bilden, von denen jedes mit der einzelnen Welle des Umwandlers verbunden ist. Dieser Umwandler verfügt über eine zusätzliche Eingangswelle. Wenn die Phasen und die Geschwindigkeiten der Taumelbewegung der Taumelscheiben gleich sind (d. h. zwei Eingangsgeschwindigkeiten), wird am Ausgang der Vorrichtung die Geschwindigkeit Null erreicht. Bei entgegengesetzter Richtung der Eingangsgeschwindigkeiten oder bei entgegengesetzter Phase der Taumelbewegung arbeitet die Vorrichtung als Umwandler der Geschwindigkeit mit zwei Eingängen und zwei Ausgängen mit einem verschiedenen Verhältnis der Geschwindigkeiten.

<u>Kurzbeschreibung der Zeichnungen</u>

Die Erfindung wird anhand von Zeichnungen näher erläutert.

Es zeigen:

**Fig.1**
schematisch eine Kugelreibungs-Planeten-Drehübertragungsvorrichtung in der Scheibenmodifikation

**Fig. 2**
ein Schema, das in der Abwicklung das Zusammenwirken der Wälzbahnen und Kugeln für diese Vorrichtung darstellt

**Fig. 3, 4, 5 und 6**

eine unterschiedliche Ausführung des Wälzbahn-profils zur Erweiterung der Übertragungsverhältnis-se

**Fig. 7**

einen Querschnitt für die allgemeine Übersicht des Umwandlers der Geschwindigkeit mit einer derartigen Drehübertragungsvorrichtung

**Fig. 3 bis 19**

verschiedene konstruktive Varianten der Kugelreibungs-Planeten-Drehübertragungsvorrichtung in koaxialer Bauart

**Fig. 8, 10, 12, 14, 16 und 18**

eine allgemeine Übersicht über Varianten der Drehübertragungsvorrichtung

**Fig. 9, 11, 13, 15, 17 und 19**

Schemas des Zusammenwirkens der Wälzbahnen mit den Kugeln

**Fig. 20**

einen Axialschnitt der Drehübertragungsvorrichtung mit periodischen Wälzbahnen

**Fig. 21**

Schemas, die die Verbindung des Neigungswinkels der Taumelscheibe, des Neigungswinkels der Fronten der periodischen Wälzbahnen und des Winkels zwischen den Wälzbahnen an der Kontaktstelle mit der Kugel darstellen

**Fig. 22 bis 27**

in der Seitenablenkung Schemas des Zusammenwirkens der Wälzbahnen und der Kugeln für verschiedene Varianten der Drehübertragungsvorrichtung mit periodischen Wälzbahnen

**Fig. 22 und 23**

Schemas, die die Möglichkeiten der Erfüllung der Winkelbedingung durch die Auswahl der Anzahl der Perioden der Wälzbahnen bei gleichem Neigungswinkel der Taumelscheibe und bei gleichen Amplituden der Wälzbahnen darstellen

**Fig. 24 und 25**

Schemas, die zeigen, dass die Winkelbedingung durch die Änderung der Amplitude der Wälzbahnen bei konstanter Anzahl der Perioden erfüllt werden kann

**Fig. 26 und 27**

Schemas, die zeigen, wie die Erfüllung der Winkelbedingung durch die Änderung des Neigungswinkels der Taumelscheibe erreicht werden kann

**Fig. 28 und 29**

Axialschnitte und Schemas des Zusammenwirkens der Wälzbahnen mit Kugeln für die Drehübertragungsvorrichtungen, in der eine der periodischen Wälzbahnen unterbrochen ausgebildet ist, und zwar in Form der auf einer Kreislinie verteilten Meridiannuten

**Fig. 30 und 31**

Axialschnitte und Schemas des Zusammenwirkens der Glieder der Drehübertragungsvorrichtung mit dem Rahmen aus zwei einzelnen Elementen

**Fig. 32, 33, 34 und 35**

Differenzwandler der Geschwindigkeit mit einer koaxialen Drehübertragungsvorrichtung, die sich voneinander durch eine Vorrichtung zur Umwandlung der Wälzbewegung der Scheibe in eine Drehung der Welle und durch Vorrichtungen zur Übertragung der Drehung der Wälzscheibe unabhängig von ihrer Wälzbewegung (durch die Vorrichtung zur Übertragung der Drehung zwischen den geneigten Wellen) unterscheiden

**Fig. 36 und 37**

einen zweistufigen Umwandler mit den Vorrichtungen zur Übertragung der Stufen, die auf einer Taumelscheibe vorhanden sind, wobei die Umwandler sich voneinander nur durch die Ausführung der Vorrichtung zur Umwandlung der Wälzbewegung der Scheibe in eine Drehung der Welle unterscheiden

**Fig. 38 und 39**

einen zweistufigen Umwandler, der aus zwei einander umfassenden Drehübertragungsvorrichtungen bestehen und sich durch eine Vorrichtung zur Umwandlung der Wälzbewegung in eine Drehung der Welle unterscheiden

**Fig. 40, 41, 42 und 43**

verschiedene Modifikationen des zweistufigen Umwandlers mit einer konsequenten Anordnung der Stufen

**Fig. 44**

schematisch eine Drehübertragungsvorrichtung mit zwei Taumelscheiben

**Fig. 45, 46 und 47**

prinzipielle Schemas von Varianten der Umwandler auf der Basis dieser Drehübertragungsvorrichtung

Es ist zu bemerken, dass alle Arten der Konstruktionen des Umwandlers, die der Erfindung entsprechen, nicht durch die dargestellten Figuren beschränkt sind.

Ausführungsbeispiele der Erfindung

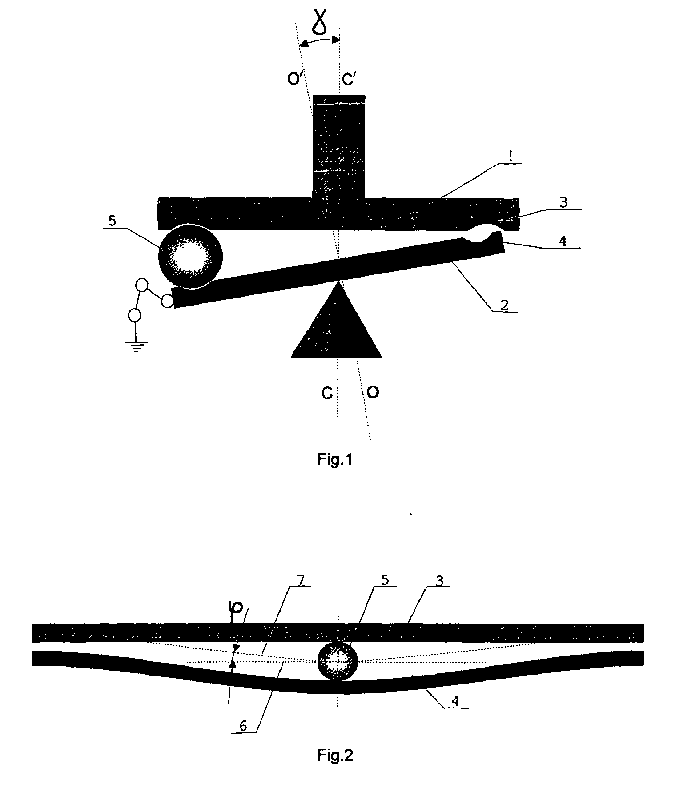

Die Drehübertragungsvorrichtung in **Fig. 1** enthält zwei Drehkörper 1 und 2, die in Form von Scheiben mit geschlossenen Ringwälzbahnen 3 und 4 auf den einander zugewandten Flächen ausgebildet sind. Die Scheibe 2 ist mit der Möglichkeit der Taumelbewegung ausgebildet. Dazu ist ihre Drehachse OO zur Achse CC der Drehübertragungsvorrichtung geneigt, während die Scheibe 2 sich um die eigene Drechachse OO dreht und sich gegen die Achse CC unabhängig von der Drehung abwälzt, d. h. die Scheibe 2 ist eine Taumelscheibe. Im Kontakt mit den Wälzbahnen 3 und 4 steht ein Wälzkörper 5, in diesem Fall eine Kugel.

In **Fig. 2** ist ein Schema des Zusammenwirkens der Kugel 5 mit den Wälzbahnen 3 und 4 gezeigt. Mit den Ziffern 6 und 7 sind Linien der Bewegung des Zentrums der Kugel 5 gegenüber den Scheiben 1 und 2 bezeichnet. Der Neigungswinkel γ der Taumelscheibe 2 zur Scheibe 1 wird so gewählt, dass der Winkel φ zwischen den Wälzbahnen 3 und 4 an der Stelle des Kontakts mit der Kugel 5 den Winkel der Selbstverklemmung der Kugel nicht überschreitet. Die Selbstverklemmung der Wälzkörper wird in den sogenannten Überholkupplungen oder in den Freilaufkupplungen (s. z. B. Poljakov V.S., Barbasch I.D. Kupplungen L. "Maschinenbau", 1973, S. 225) breit eingesetzt. Unter dem Winkel der Selbstverklemmung wird der Winkel zwischen zwei Flächen verstanden, bei dem sich der Wälzkörper durch die Reibungskräfte in den engen Teil des Keils einrollt und zwischen den Oberflächen festgeklemmt wird. Der Winkel der Selbstverklemmung der Wälzkörper hängt vom Reibungskoeffizient des Wälzkörpers gegen die Wälzbahnen ab, die ihrerseits vom Material und der Qualität der Bearbeitung der Oberfläche der Körper und der Wälzbahnen abhängen. Wie Untersuchungen gezeigt haben, ist es zweckmäßig, den Winkel φ im Bereich von 0,1 - 10 Grad zu wählen. Aber in einzelnen Fällen, z. B. für Wälzkörper aus einem elastischen Werkstoff oder für Wälzbahnen mit einer Reibbeschichtung, kann er sogar 15 - 17 Grad betragen. Bei der Drehung einer der Scheiben (beispielsweise Scheibe 1) gegen die andere Scheibe rollt sich die Kugel 5 in den engeren Teil des Keils zwischen den Wälzbahnen 3 und 4 ein. Im Unterschied zur Überholkupplung erfolgt die Selbstverklemmung in der Drehübertragungsvorrichtung gemäß der Erfindung nicht, weil die Scheibe 2 und die Kugel 5 zwei Freiheitsstufen aufweisen. Unter der Druckwirkung der Kugel 5 auf die Bahn beginnt die Scheibe 4 zu wälzen. Die Bewegung des Kugelzentrums an der Umlaufbahn erfolgt mit einer Geschwindigkeit, die um die Hälfte geringer als die Geschwindigkeit des Punkts auf der Oberfläche der Kugel an der Stelle ihres Kontakts mit der Bahn 3 ist. Die Planetenbewegung der Kugel ruft die Wälzbewegung der Scheibe hervor, die mit einer Geschwindigkeit erfolgt, die um die Hälfte geringer als die Eingangsgeschwindigkeit der Drehung ist, d. h., das Übertragungsverhältnis der Vorrichtung beträgt 2:1. Die geneigte Lage der Taumelscheibe 2 führt dazu, dass die Kugel 5 ständig an die Oberfläche der Wälzbahnen 3 und 4 ohne zusätzliche Andruckvorrichtungen gepresst wird, die in den normalen Kugelreibungs-Planetenübertragungsvorrichtungen erforderlich sind. Bei der Erhöhung der Belastung oder beim Verschleiß der Wälzbahnen rutscht die Kugel 5 in einen engeren Teil des Keils zwischen den Bahnen 3 und 4 durch, und die Anpresskraft erhöht sich automatisch. Auf diese Weise arbeitet die Drehübertragungsvorrichtung ohne Durchrutschen der Kugel, denn die Geschwindigkeit der Planetenbewegung der Kugel 5 an der Umlaufbahn ist mit der Geschwindigkeit ihrer Drehung gegen die eigene Achse abgestimmt. Der Neigungswinkel der Taumelscheibe ist mit dem Winkel φ zwischen den Wälzbahnen durch folgendes Verhältnis verbunden: tg $\gamma$ = π/2 tg φ, d. h. bei der Auswahl der Winkels φ > Bereich von 0,1 - 10 Grad sollte der Neigungswinkel der Taumelscheibe im Bereich von 0,2 - 15 Grad ausgewählt werden.

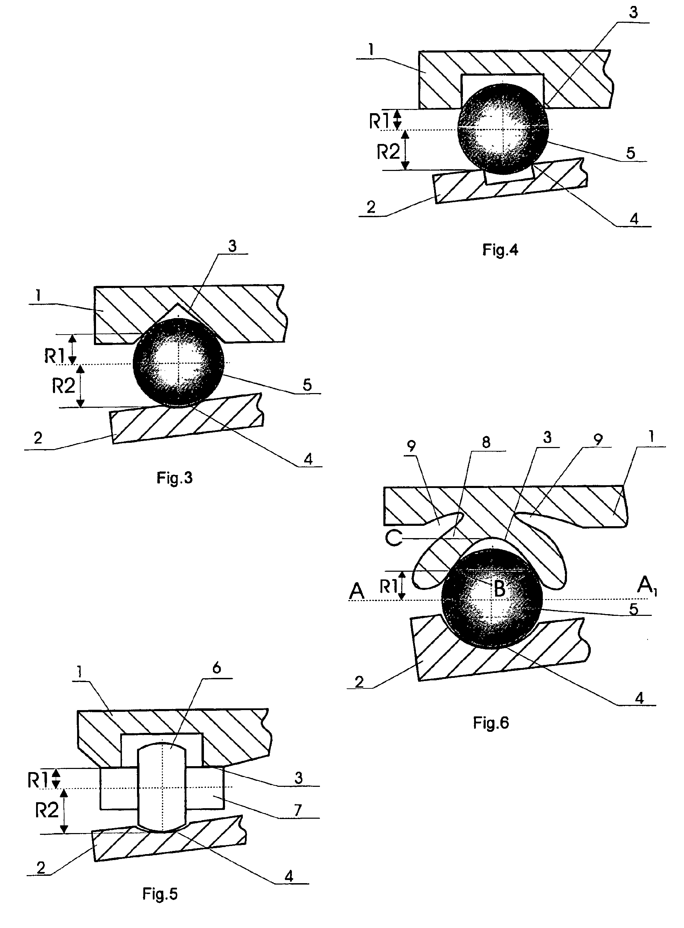

Wie in einer normalen Kugelreibungs-Planetenübertragung kann in der vorgeschlagenen Drehübertragungsvorrichtung der Bereich der Übertragungsverhältnisse erhöht werden, indem die nutzbaren Wälzradien R1 und R2 des Wälzkörpers 5 an den Bahnen 3 und 4 geändert werden (s. **Fig. 3, 4 und 5**). Dazu werden die Profile des Querschnitts der Bahnen 3 und 4 so ausgeführt, dass sich die Wälzradien der Kugel R1 und R2 an den Bahnen 3 und 4 nicht als gleich erweisen. Das Übertragungsverhältnis $i_{12}$ der Scheibe 1 zur Scheibe 2 beträgt $i_{12}$ = 1 + R1/R2.

Die **Fig. 5** zeigt den Fall, in dem der Unterschied bei der Ausführung des Wälzkörpers in Form einer stufenförmigen Rolle entsteht, die die Wälzbahnen 3 und 4 über Stufen 6 und 7 mit unterschiedlichem Querschnitt kontaktieren.

Die **Fig. 6** zeigt, wie eine Drehübertragungsvorrichtung mit einer automatischen Regelung des Übertragungsmomentwerts arbeiten kann. Der äußere Ringteil jeder Scheibe (in diesem Fall Scheibe 1) mit der Wälzbahn darauf wird so ausgeführt, dass die Seitenwände 8 der Wälzbahn gegeneinander elastisch beweglich sind. Anders gesagt, die Wälzbahn kann im Schnitt den Krümmungsradius ändern. In **Fig. 6** wird die Beweglichkeit der Seitenwände 8 der Bahn durch zwei abgedrückte, ringförmige Abschnitte 9 sichergestellt. Bei der Erhöhung der Belastung an der Ausgangswelle bewegt sich die Kugel 5 auf einer Kreislinie in den engeren Teil des Keils zwischen den Wälzbahnen, wobei die Kugel die Wände 8 der Wälzbahn 3 voneinander spreizt. Der Punkt des Kontakts der Kugel mit der Bahn 3 verlagert sich vom Punkt B zum Punkt C, wobei der nutzbare Wälzradius R1 der Kugel 5 und der Bahn 5 vergrößert wird. Diese Vergrößerung ruft eine Vergrößerung des Übertragungsverhältnisses und des Übertragungsmoments hervor.

Der Differenzumwandler der Geschwindigkeit mit der Scheiben-Reibungs-Planetenvorrichtung (s.

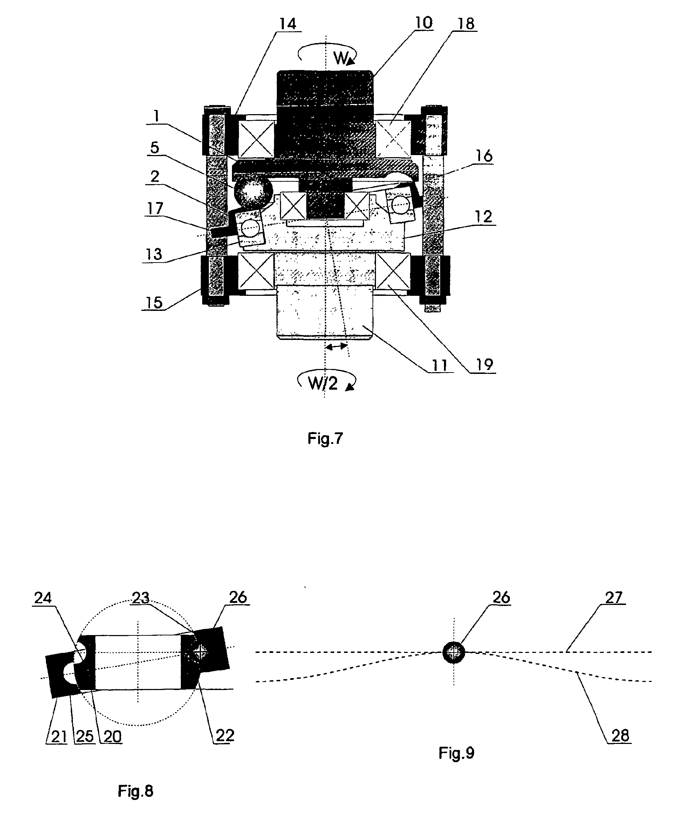

**Fig. 7**) enthält eine Welle 10, die fest mit dem Drehkörper 1 gekoppelt ist, und eine Welle 11, die mit der Taumelscheibe 2 durch eine Vorrichtung zur Umwandlung ihrer Wälzbewegung in eine Drehung der Welle verbunden ist. Diese Vorrichtung weist in diesem Fall eine Stirnkurve 12 auf, die mit der Taumelscheibe 2 über Lager 13 zusammenwirkt. Als drittes Glied dient im Umwandler das Gehäuse, das durch zwei Flansche 14 und 15 gebildet wird. Die Taumelscheibe 2 ist mit dem Gehäuse 14 über die Vorrichtung verbunden, die ihre Drehung bei der Beibehaltung der Wälzbewegung verhindert. Diese Vorrichtung weist Zugstangen 16 auf, die durch Öffnungen in einem Peripherieringteil 17 der Taumelscheibe durchlaufen. Die Zugstangen 16 ziehen die Flansche 14 und 15 zusammen. Die Öffnung für die Stangen 16 hat in der Taumelscheibe Abmessungen, die die Schiefstellungen der Scheibe bei der Wälzbewegung zulässt. Die Wellen 10 und 11 sind in den Gehäuseflanschen 14 und 15 über Lager 18 und 19 eingesetzt.

Die Reibungs-Planeten-Übertragungsvorrichtung koaxialer Bauart enthält einen Rahmen 20 und eine Taumelscheibe 21, die einander umfassen.

In den **Fig. 8, 10, und 12** sind die Drehübertragungsvorrichtungen dargestellt, in denen die Taumelscheibe 21 den Rahmen 20 von außen umfasst. Es ist zu bemerken, dass die umgekehrte Zusammenstellung ausreichend arbeitsfähig ist, wenn die Taumelscheibe 21 innerhalb des Rahmens angeordnet ist. Seitliche Paarflächen 22 und 23 des Rahmens 20 und der Scheibe 21 sind in Form eines kugelförmigen Gürtels mit dem Mittelpunkt der Kugel (Punkt C) im Zentrum der Symmetrie der beiden Teile angeordnet. Die Taumelscheibe ist mit der Möglichkeit der Taumelbewegung in Bezug auf den Punkt C angebracht. Auf den seitlichen Paarflächen sind Wälzbahnen 24 und 25 angeordnet. Die Bahn 25 auf der Taumelscheibe stellt eine Ringnut dar, die gemäß der Äquatoriallinie der kugelförmigen Fläche der Taumelscheibe verläuft. Die Bahn 24 ist eine Ringnut, die von der Äquatoriallinie der kugelförmigen Oberfläche 22 um einen Abstand verschoben ist, der der Hälfte des Ausschlags der Wälzbewegung der Scheibe 21 gleich ist. Die beiden Nuten weisen im Querschnitt eine Halbkreisform auf; an der Stelle ihrer Kreuzung ist eine Kugel 26 angeordnet, die im ständigen Kontakt mit beiden Ringnuten steht. Mit den Bezugsziffern 27 und 28 ist die Lage der mittleren Linien der Nuten 24 und 25 in der Seitenauslenkung gekennzeichnet.

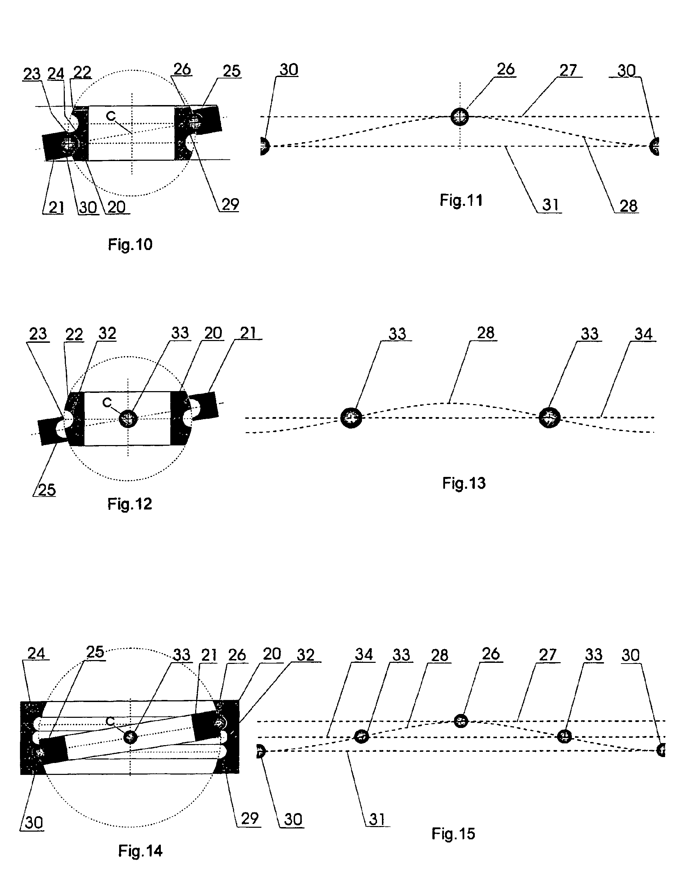

Bei einer anderen Bauart dieser Drehübertragungsvorrichtung (**Fig.10**) sind auf einem Rahmen 29 zwei symmetrische, parallele Ringnuten 24 und 29 angeordnet, die an beiden Seiten des Äquators in einem Abstand verlaufen, der der Hälfte des Ausschlags der Taumelscheibe 21 gleich ist. An der Stelle der Kreuzung der Nuten 24 und 29 mit der Nut 25 auf der Taumelscheibe 21 sind zwei Kugeln 26 und 30 vorgesehen. Im Schema der **Fig. 11** ist mit dem Bezugszeichen 31 die Mittellinie der Nut 29 gekennzeichnet.

In **Fig. 12** liegt die Nut 32 auf dem Rahmen 20 an dessen Äquator und greift in die Nut 25 auf der Taumelscheibe über zwei diametral gegenüberliegende Kugeln 33 ein, die an der Stelle der Kreuzung der Bahnen 32 und 25 angeordnet sind. In **Fig. 13** sind es die Kreuzungspunkte der Mittellinien 28 und 34 der Nuten 25 und 32.

Die Vorrichtung in **Fig. 14** vereinigt zwei vorherige Varianten. Hier sind auf dem Rahmen 20 drei Ringnuten 24, 29 und 32 angeordnet, die zueinander parallel verlaufen. Die Kugeln 26, 30 und zwei Kugeln 33 sind in den Nuten an der Stelle ihrer Kreuzung mit der Nut 25 auf der Taumelscheibe angeordnet. Hier ist zu bemerken, dass mehr Nuten auf dem Rahmen vorhanden sein können; wichtig ist es, dass sie zueinander parallel sein und auf Flächen liegen müssen, die rechtwinklig zur Drehachse des Rahmens 20 stehen; die Kugeln müssen an der Stelle der Kreuzung dieser Nuten mit der Nut 25 auf der Taumelscheibe vorhanden sein. Dabei sind die Kugeln 33, die in die auf der Linie des Kugelgroßkreises liegende Nut 32 eingreifen, auf der Kreislinie der Ringnuten diametral gegenüberliegend angeordnet. D. h., das System der Kugeln ist ausgeglichen. Für die restlichen Nuten gleichen die Kugeln einander nicht aus; für jede Nut, die auf einer Seite des Äquators auf dem Rahmen liegt, ist es deshalb zweckmäßig, eine ihr symmetrisch verlaufende Nut auf der anderen Seite des Äquators vorzusehen.

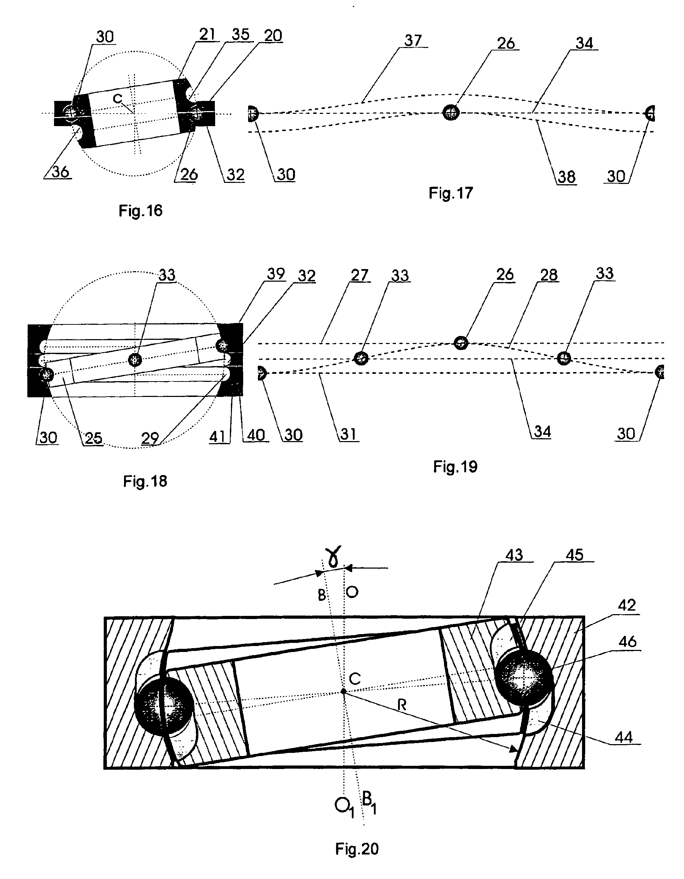

In **Fig. 16** ist eine Variante der Vorrichtung dargestellt, bei der auf der Taumelscheibe zwei Ringnuten 35 und 36 gebildet sind, die auf verschiedenen Seiten der Äquatorlinie der Scheibe in einem Abstand angeordnet sind, der der Hälfte des Taumelbewegungsausflugs gleich ist.

Auf dem Rahmen ist die Nut 32 auf der Linie des Großkreises der kugelförmigen Oberfläche angeordnet; die Nut 32 greift in die Nuten 35 und 36 über die Kugeln 26 und 30 ein, die an den Stellen der Kreuzung der Mittellinien 37 und 38 der Bahnen 35 und 36 mit der Mittellinie 34 der Bahn 32 angeordnet sind.

Im Prinzip ist eine Variante mit einem Nutsystem auf der Taumelscheibe und mit einem Nutsystem auf dem Rahmen möglich. Bei dieser Variante ist die Anzahl der Kugeln vergrößert, die mit den Drehkörpern zusammenwirken. Die Vergrößerung der Anzahl der Kugeln verteilt die Kraftströme auf eine große Anzahl von zusammenwirkenden Elementen und erhöht das Grenzmoment, das von der Vorrichtung bei gleichen Bedingungen übertragen wird.

Der Rahmen kann aus einzelnen Ringen 39, 40, 41 bestehen, auf denen eine Wälzbahn (s. **Fig. 18 und 19**) angeordnet ist. Die Ringe können sich um die gemeinsame Achse unabhängig voneinander drehen. Bei einer solchen Drehübertragungsvorrichtung vergrößert sich die Anzahl der Eingangs- und Ausgangselemente, wodurch ihre Funktionsmöglichkeiten erweitert werden. Die Besonderheiten des Betriebs der Umwandler mit solchen Drehübertragungsvorrichtungen werden weiter unten beschrieben.

Die Drehübertragungsvorrichtung mit der Taumelscheibe mit periodischen Wälzbahnen weist zwei einander umfassende Rahmen 42 und 43 auf. Der Rahmen 43 hat die Möglichkeit der Drehung um eine Achse BB1, die zur Achse $OO_1$ der Drehübertragungsvorrichtung geneigt ist, und hat ferner die Möglichkeit der Taumelbewegung in Bezug auf den Punkt C, der den Punkt der Kreuzung der Achsen ist. D. h., dass der Rahmen 43 die Taumelscheibe ist. Die seitlichen, einander zugewandten Oberflächen des Rahmens 42 und der Taumelscheibe sind in Form eines kugelförmigen Gürtels des Radius R mit dem Mittelpunkt der Kugel im Punkt G vorhanden. Auf diesen Oberflächen sind im Äquatorialbereich nach dem Azimut periodische Wälzbahnen 44 und 45 angeordnet, die über eine Kugelkette 46 ineinander greifen. Eine oder beide Wälzbahnen stellen geschlossenen, periodisch in Achsenrichtung gebogene Nuten mit halbrundem Querschnitt dar. Der Neigungswinkel γ der Taumelscheibe 43 und die Form der periodischen Wälzbahnen 44 und 45 sind derart gewählt, dass die Neigungswinkel der Bahnen zueinander an der Stelle ihrer Berührung mit den Wälzkörpern 46 den Winkel der Selbstverklemmung der Wälzkörper nicht überschreiten.

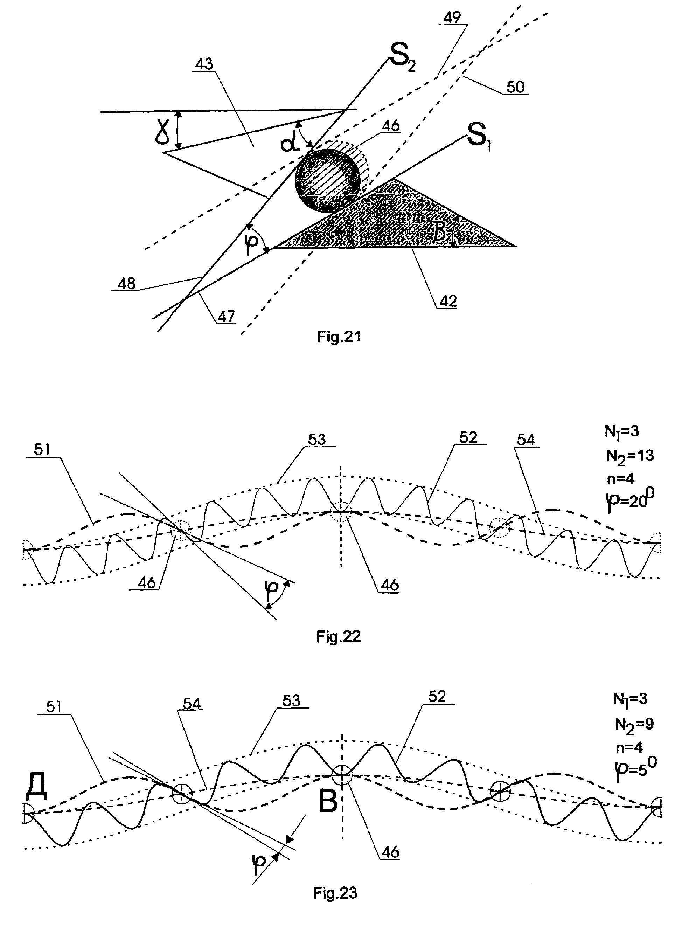

In der **Fig. 21** sind die Fronten 47 und 46 der Wälzbahnen 44 und 45 schematisch gezeigt. Bei einer vollen Wälzbewegung der Scheibe 43 taumelt die Kugelkette 46 zusammen mit der Taumelscheibe; jede Kugel, die mit der Front 48 der Wellenbahn 45 zusammenwirkt, bewegt sich auf einer Kreislinie gegen den Rahmen 42 und einen Winkel, der der Periode der Wälzbahnen 45 entspricht. In der gleichen Zeit drücken die Kugeln 46 als Kurven auf die Front 47 der Wellenbahn 44 auf dem Rahmen 42 und rufen ihre Umkehr gegen die Kugelketten 46 um einen Winkel hervor, der der Periode der Wälzbahn 44 entspricht. Die gesamte Umkehr eines der Rahmen gegeneinander erfolgt beim vollen Zyklus der Wälzbewegung der Scheibe um einen Winkel, der der Summe oder der Differenz dieser Umdrehungen gleich ist, und zwar in Abhängigkeit davon, auf welche Front die Kugeln wirken. Auf diese Weise wird das Übertragungsverhältnis *i* der Baugruppe durch folgenden Ausdruck bestimmt:

$$1/i = 1/N_1 \pm 1/N_2 \qquad (3)$$

wobei $N_1$ und $N_2$ die Anzahlen der Perioden der Wälzbahnen 44 und 45 sind. Die Erfüllung der Winkelbedingung sichert die Anordnung jeder Kugel im keilförmigen Spalt zwischen zwei geneigten Oberflächen S1 und S2 mit einem Winkel dazwischen, der kleiner als der Winkel der Selbstverklemmung der Kugeln ist. Bei der Verlagerung einer der Flächen, z.B. beim Rutschen der Oberfläche S2 gegenüber der Oberfläche S1 (das der Wälzbewegung der Scheibe 43 entspricht), rollen die Kugeln 46 in den engeren Teil des Keils zwischen den Flächen S1 und S2 ohne Durchrutschen und drücken auf die Front 47 der Wellenbahn 44, wobei die Kugeln sie drehen lassen, wie es oben beschrieben wurde. In der gleichen Zeit lassen die Reibungskräfte, die beim Wälzen der zu verklemmenden Kugeln entstehen, beim Zusammenwirken der Kugel mit einer der Flächen diese Fläche gegen die Kugelkette drehen. Weil die Kugelkette 46 und die Taumelscheibe 43 zwei Freiheitsstufen haben, sind die Abwälzbewegung der Kugeln an der Umlaufbahn und die Verlagerung der Rahmen unter Einwirkung der Reibungskräfte und der Druckkräfte miteinander abgestimmt, d. h. die Kugeln rollen in den Wellenbahnen 44 und 45 ohne Durchrutschen.

In der Patenanmeldung W0008201043 ist als Bedingung des reinen Wälzens der Kugel die Ausrichtung der Strecke angenommen, die die Kugel gegenüber der Bahn 45 auf der Taumelscheibe 43 und gegenüber der Bahn 44 auf dem Lager 42 zurücklegt. Aber diese Bedingung erweist sich nicht als ausreichend. Wenn die Winkel zwischen den Wälzbahnen an der Stelle des Kontakts mit den Kugeln größer als der Winkel der Selbstverklemmung der Kugeln sind (wie es auf den Zeichnungen der Patentanmeldung W0008201043 zu sehen ist), rutscht die Kugel aus dem Keil heraus und wird an der Stelle der Kreuzung der Bahnen nur mit ihren gegenüberliegenden Wänden 49 und 50 festgehalten, d. h., dass die Kugel als Kurve wirkt.

In **Fig. 21** ist der Bereich des Aufenthalts der Kugel in diesem Fall mit Strichlinien gezeigt. Es ist klar, dass die Kugel in diesem Fall unbedingt gegenüber eine der Oberflächen ( 47, 48, 49 oder 50) durchrutscht, und das Vorhandensein des zulässigen Bereichs, der größer als das Ausmaß der Kugeln ist, ruft deren Schlagen und einen erhöhten Verschleiß hervor.

Der Neigungswinkel φ der Wälzbahnen zueinander hängt von den Neigungswinkeln α und β der Fronten 47 und 48 der Wälzbahnen 44 und 45 zur Äquatoriallinie jeweils auf dem Rahmen 42 und der Wälzscheibe 43 und vom Neigungswinkel γ der Taumelscheibe ab und wird wie folgt bestimmt:

$$\varphi = \alpha - \beta - \gamma, \text{ bei } \alpha \geq \beta; \qquad (4)$$

$$\varphi = \beta - \alpha + \gamma \leq 10, \text{ bei } \alpha \geq \beta; \qquad (5)$$

Wie oben gezeigt wurde, liegt der Winkel der Selbstverklemmung für die gewöhnlichen Konstruktionsmaterialien im Bereich von 0,1 - 10 Grad, deshalb soll für den Winkel φ die Bedingung

$$\varphi < 10 \text{ Grad} \qquad (6)$$

erfüllt werden.

Im allgemeinen Fall hängen die Winkel α und β von den Amplituden der Krümmung und von der Anzahl der Perioden der Wälzbahnen ab. Die Anzahl der Perioden $N_1$ und $N_2$ der Wälzbahnen auf dem Lager 42 und auf der Taumelscheibe sind miteinander verbunden, denn die ganze Anzahl der Perioden soll auf der gleichen Radiuslinie R zusammenpassen. In der Patentanmeldung WO008201043 ist angegeben, dass sich die Anzahl der Perioden der Wälzbahnen von der Anzahl der Kugeln um 1 und voneinander um 2 unterscheiden soll, wobei die Anzahl der Kugeln durch 4 teilbar sein muss. Diesseitige Untersuchungen haben gezeigt, dass die Anzahl der Perioden $N_1$ und $N_2$ der Wälzbahnen und die Anzahl der Kugeln $n$ durch folgendes Verhältnis miteinander verbunden sind:

$$N_1 = kn \pm 1; N_2 = qn \pm 1 \qquad (7)$$

wobei $k$ und $q$ ganze Zahlen oder Zahlen der Art 1/m sind, wobei $m$ eine Zahl ist, durch die die Anzahl der Kugeln ohne Rest dividiert wird. Wie früher erwähnt wurde, kann die Anzahl der Kugeln beliebig sein.

Aus der ganzen Vielfalt der Kombinationen der Zahlen $N_1$ und $N_2$, die der Bedingung (7) gerecht werden, sollen solche ausgewählt werden, bei denen die Ungleichung (6) erfüllt wird.

Die **Fig. 22 und 23** zeigen die Möglichkeit, wie durch die Änderung von $N_1$ und $N_2$ die Verkleinerung des Winkels φ erreicht werden kann. Mit den Bezugszeichen 51 und 52 sind die Mittellinien der Wälzbahnen 44 und 45 jeweils auf dem Rahmen 42 und auf der Taumelscheibe 43 gekennzeichnet. Die Bezugszeichen 53 ist die Linie, an der der Punkt auf der Oberfläche der Taumelscheibe taumelt. Mit dem Bezugszeichen 54 ist die Laufbahn der Bewegung der Kugeln 46 bezeichnet. Die Amplitude der Wälzbahnen und der Neigungswinkel der Taumelscheibe 43 sind in beiden Figuren gleich. Im ersten Fall, bei $N_1 = 3$, $N_2 = 13$ und n = 4, überschreiten die Winkel zwischen den Wälzbahnen mindestens an zwei Stellungen der Kugel 46 die Winkel der Selbstverklemmung.

In **Fig. 23** kreuzen sich die Mittellinien der Wälzbahnen 51 und 52 an allen Stellungen der Kugeln 46 unter Winkeln, die kleiner als der Selbstverklemmungswinkel sind. Die Anzahl der Perioden der Wälzbahnen und die Anzahl der Kugeln betragen jeweils 3, 9 und 4.

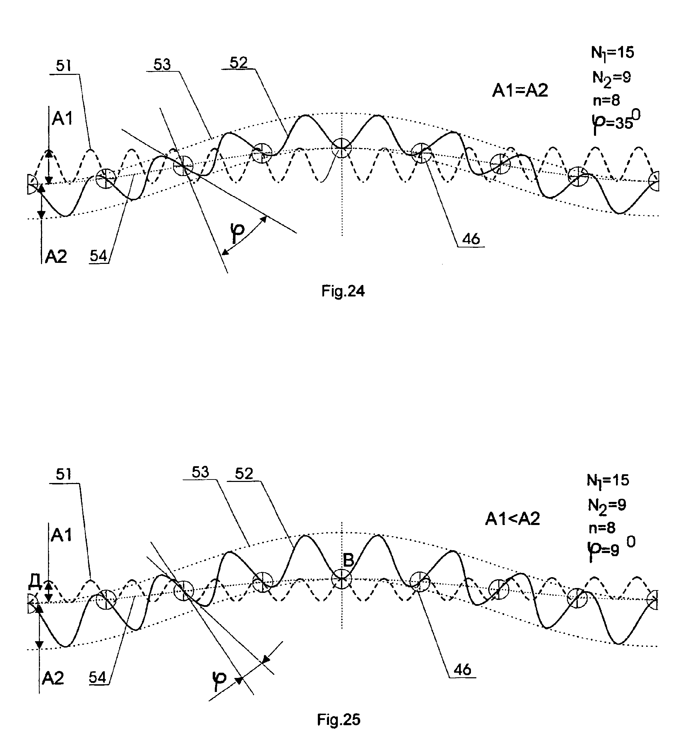

Der Winkel φ kann entweder durch die Änderung der Amplitude der Wälzbahnen oder durch die Änderung des Neigungswinkels der Taumelscheibe bei gleicher Anzahl der Perioden der Wälzbahnen geregelt werden. Diese Situation wird in den Fig. **24, 25, 26 und 27** gezeigt.

In den **Fig. 24 und 25** sind die Mittellinien 51 und 52 der Wälzbahnen mit der Anzahl der Perioden 15 und 9 und mit der Anzahl der Kugeln 8 gezeigt. Der minimale Winkel der Kreuzung der Wälzbahnen überschreitet in der ersten Figur 10 Grad, d. h. dass der Winkel größer als der Selbstverklemmungswinkel ist.

In **Fig. 25** überschreitet bei der Verringerung der Amplitude A1 der Wälzbahnkrümmung auf dem Rahmen 42 der maximale Winkel der Kreuzung der Bahnen den Selbstverklemmungswinkel nicht. In diesem Fall arbeiten alle Kugeln 46 im Modus der Selbstverklemmung, d. h. ohne Durchrutschen.

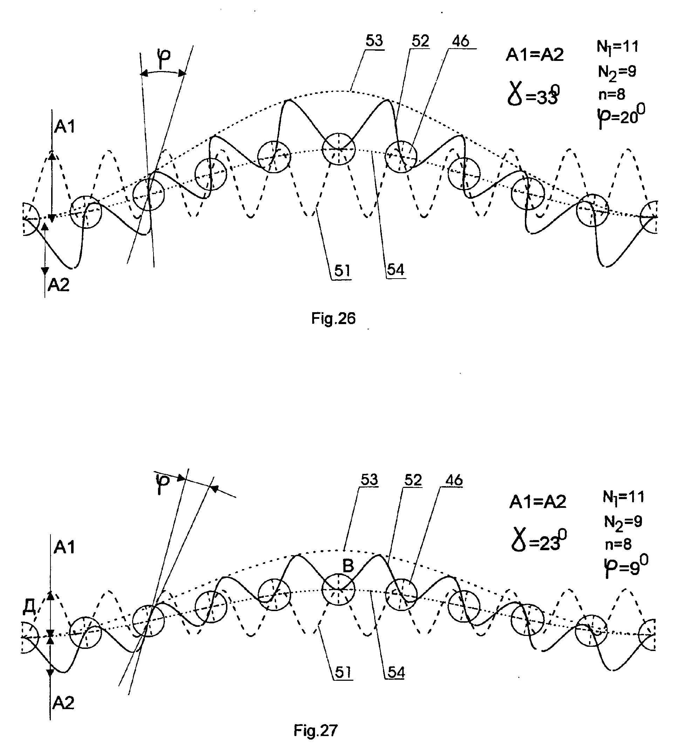

Die **Fig. 26 und 27** unterscheiden sich voneinander nur durch den Neigungswinkel γ der Taumelscheibe 43. Es ist eindeutig, dass in der Drehübertragungsvorrichtung nach der **Fig. 27** die Bedingung (4) erfüllt wird; die Kugeln bewegen sich ohne Durchrutschen. Die Wälzbahn auf einem der Rahmen kann nicht geschlossen sein.

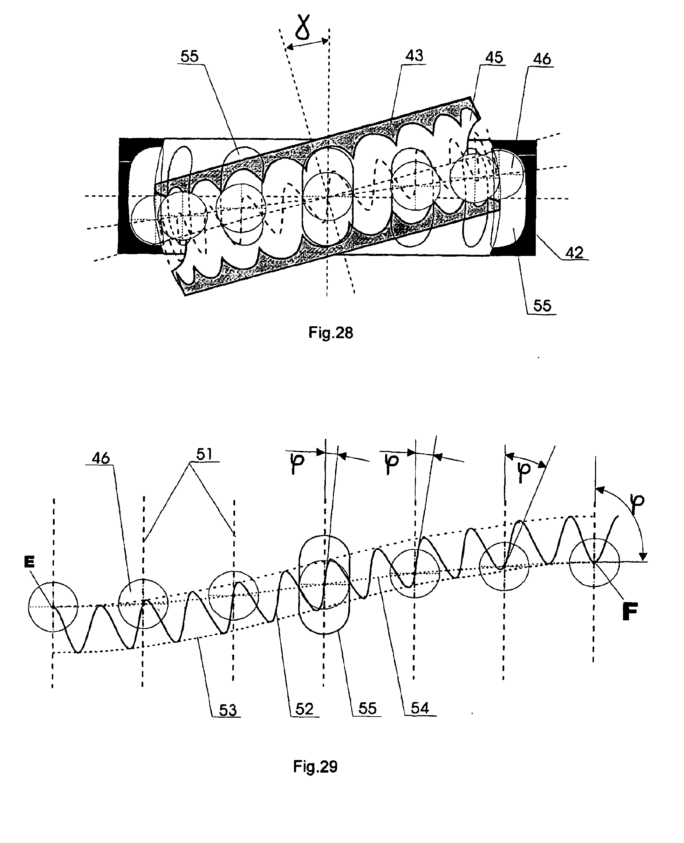

In **Fig. 28** ist eine Drehübertragungsvorrichtung dargestellt, bei der die periodische Wälzbahn auf dem Rahmen 42 in Form eines Systems der auf einer Kreislinie verteilten Nutstrecken 55 angeordnet ist, die längs den Meridianen der kugelförmigen Flächen angeordnet sind.

In **Fig. 29** wie auch auf den vorhergehenden Schemas sind mit den Bezugzeichen 51 und 52 die Mittellinien der jeweiligen Wälzbahnen gekennzeichnet. Es ist eindeutig, dass eine solche Drehübertragungsvorrichtung ohne Durchrutschen der Kugeln 46 bei einer steilen Front der Krümmung der Wälzbahn 45 und bei kleinen Winkeln der Taumelscheibe 43 arbeitet, denn die jeweilige Bedingung wird in diesem Fall in die Beziehung φ = 90° - d + γ < 10° transformiert. Dabei wird nicht für alle Kugeln 46 die Bedingung des reinen Wälzens erfüllt.

Für diejenigen Kugeln, die sich in den Punkten E und F befinden, ist die Bedingung der Selbstverklemmung unter keinen Werten a, β oder γ zu erfüllen. Im Gegensatz zu der Behauptung in der Beschreibung der Patentanmeldung W0008201043, dass die Vorrichtung mit den Meridiannuten auf dem umfassendem Teil ohne Durchrutschen arbeitet, wird daher behauptet, dass diese Konstruktion in jedem Fall durchrutscht. Wenn die nicht geschlossene Wälzbahn auf der Taumelscheibe 43 und die geschlossenen Wälzbahn auf dem Rahmen 42 angeordnet sind, erweitert die jeweilige Winkelbedingung φ = 90° - β - γ < 10° die Möglichkeiten für die Auswahl der Winkel β und γ.

Die Überlegungen über das Durchrutschen der Kugeln in den Punkten E und F bleiben auch für diesen Fall bestehen.

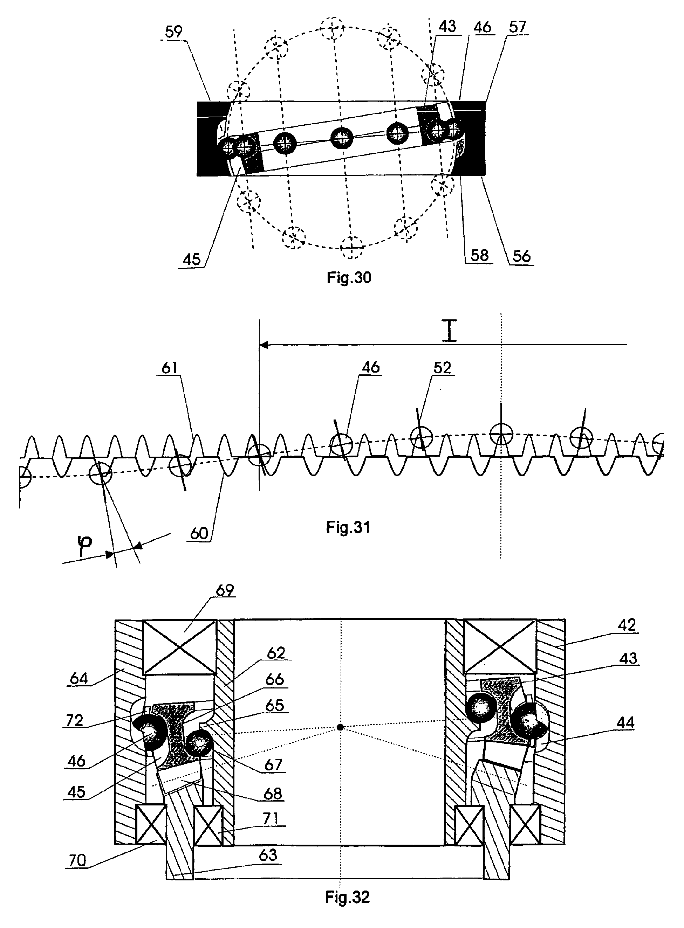

In der Drehübertragungsvorrichtung in **Fig. 30** wirkt die Kugelkette 46 gleichzeitig mit drei periodischen Wälzbahnen zusammen. Die Wälzbahn 45 auf der Taumelscheibe 43 ist nicht geschlossen und stellt die auf einer Kreislinie verteilten Nutstrecken dar. Der Rahmen ist aus zwei einzelnen, unabhängig drehbaren Teilen ausgeführt, die mit den Kanten gekoppelte Rahmen 56 und 57 gleichen Durchmessers bilden. Auf der inneren Seitenfläche sind auf einer Kreislinie ihres Kantenkontakts periodische Bahnen 58 und 59 angeordnet, die unterschiedliche Perioden haben. Auf dem Schema der **Fig. 31** sind die Mittellinien der Wälzbahnen 58 und 59 mit den Bezugszeichen 60 und 61 gekennzeichnet. Mit dem Bezugszeichen 52 ist die Mittellinie der periodischen Wälzbahnen 45 auf der Taumelscheibe 43 gekennzeichnet. Bei dieser Abänderung der Drehübertragungsvorrichtungen ist diese Wälzbahn unterbrochen ausgebildet. Es ist klar, dass nicht alle Kugeln 46 mit den Rahmen 56 und 57 gleichzeitig zusammenwirken können. Die Kugeln, die links und rechts der Zone 1 in **Fig. 31** liegen, wirken mit dem Rahmen 56 und die Kugeln in Zone 1 mit dem Rahmen 57 zusammen. Das Übertragungsverhältnis der Vorrichtung hängt vom Verhältnis der Anzahl der Perioden aller drei Wälzbahnen ab, wodurch der Bereich ihrer Änderung erweitert wird.

Im Folgenden werden Umwandler der Geschwindigkeit mit den oben genannten Drehübertragungsvorrichtungen betrachtet.

Der Umwandler in **Fig. 32** ist mit der Drehübertragungsvorrichtung mit geschlossenen periodischen Wälzbahnen auf dem Rahmen 42 und der Taumelscheibe 43 realisiert. Er enthält drei gleichachsige Hohlwellen 62, 63 und 64. Die Welle 62 ist mit der Taumelscheibe 43 durch die Vorrichtung zur Umwandlung der Drehung der Welle 62 in eine Wälzbewegung der Scheibe 43 verbunden. Er weist einen Ringvorsprung 65 auf der äußeren Seitenfläche der Welle 62 auf, der mit der Ringnut 66 auf der Taumelscheibe 43 gekoppelt wird. Zwischen den gegenüberliegenden Nutwänden 66 sind zwei Kugeln 67 einander diametral gegenüberliegend auf verschiedenen Seiten vom Ringvorsprung 65 angeordnet. Bei der Drehung der Welle 62 rollt jede Kugel 67 auf ihrer Bahn, die durch den Ringvorsprung 65 und die gegenüberliegenden Nutwände 66 gebildet wird, wobei sie die Wälzbewegung der Scheibe 43 hervorruft. Die Vorrichtung arbeitet in der Gegenrichtung, d. h., das Wälzen der Scheiben ruft die Drehung der Welle 62 hervor. Es ist zu bemerken, dass im Gegensatz zur Stirnkurve in der Patentanmeldung W08201043, bei der die Kraft nur in einer Halbperiode des Wälzens der Scheibe übertragen wird, die oben beschriebene Vorrichtung in zwei Halbperioden arbeitet. Die Welle 63 ist mit der Taumelscheibe 43 durch die Vorrichtung zur Übertragung ihrer Drehung unabhängig von der Wälzbewegung verbunden. In dieser Konstruktion stellt diese Vorrichtung ein Kegelzahngetriebe dar. Die dritte Welle des Umwandlers ist unmittelbar der Rahmen der Übertragungsvorrichtung mit der Wälzbahn 44 auf seiner Seitenfläche. Die Hohlwelle 64 ist auf die Welle 62 über das Lager 69 eingesetzt. Die Welle 63 ist zwischen den Wellen 62 und 64 über die Lager 70 und 7 zentriert. Mit den Bezugszeichen 72 ist ein dünnwandiger Separator gekennzeichnet, der in den einzelnen Drehübertragungsvorrichtungen zum Festhalten der Kugeln im gleichen Winkelabstand voneinander an denjenigen Stellen erforderlich ist, an denen die Tangenten zu den Wälzbahnen an ihrer Kreuzungsstelle parallel verlaufen (an Punkten B und D in den **Fig. 23, 25 und 27**). Der Separator wiederholt die Form der Paarflächen, d. h. stellt auch den kugelförmigen Gürtel dar. Die Aufnahmestellen des Separators 72 sind durch durchgehende Öffnungen gebildet. Hier ist zu bemerken, dass der Separator ein wesentliches Element nur für einzelne Varianten der Herstellung der Drehübertragungsvorrichtungen ist. Unter anderem wird der Separator für die Drehübertragungsvorrichtungen mit einem hohen Übertragungsverhältnis und mit einer hohen Präzision der Fertigung der Wälzbahnen nicht gebraucht. Der Umwandler stellt eine Differenzvorrichtung mit zwei Eingängen und einem Ausgang dar. Im Fall eines Getriebes ist der Eingang die Welle 62, deren Drehung ein volles Wälzen der Scheibe 43 hervorruft. Wenn eine der Wellen 63 oder 64 unbeweglich befestigt wird, d. h. am Gehäuse des Antriebsmechanismus, so wird die weitere Welle zur Ausgangswelle. Wenn eine der Wellen 63 oder 64 mit einer Geschwindigkeit dreht, die sich von der Geschwindigkeit der Eingangswelle unterscheidet, so hängt die Ausgangsgeschwindigkeit vom Verhältnis der Geschwindigkeiten am Ausgang ab. Im Fall eines Multiplikators soll die Eingangswelle eine der Wellen 63 oder 64 sein.

Es soll nun die Arbeitsweise des Umwandlers im Fall eines Getriebes betrachtet werden. Um Klarheit zu schaffen, sei die Welle 64 mit dem Gehäuse verbunden. Die Eingangswelle ist die Welle 62, bei deren Drehung die Kugeln 67 in die Abwälzbewegung auf der Umlaufbahn einbezogen werden und die Taumelbewegung der Scheibe 43 hervorruft. Weil in der Drehübertragungsvorrichtung des Umwandlers der Rahmen 42 unbeweglich ist, ruft das Zusammenwirken der Kugeln 46 mit den Wälzbahnen 44 und 45 die Drehung der Scheibe 43 mit einem Übertragungsverhältnis hervor, das durch den Ausdruck (3) bestimmt wird.

Die Drehung der Scheibe über ein Kegelradgetriebe 68 wird an die Ausgangswelle 63 übertragen, denn die Drehübertragungsvorrichtung des Umwandlers arbeitet unter der Bedingung des reinen Wälzens der Kugeln; deshalb sind die Reibungsverluste, der Lärm und der Verschleiß minimal. Es ist zu bemerken, dass der Umwandler mit der Reibungs-Planetenvorrichtung in gleicher Weise arbeit; es ändert sich nur ihr Übertragungsverhältnis. Im Schema des Umwandlers mit den Drehübertragungsvorrichtungen, die gemäß den **Fig. 18 und 30** gefertigt sind, kommen zusätzliche Wellen dazu, die unmittelbar mit den Elementen des Rahmens verbunden sind. Dabei vergrößert sich die Anzahl der möglichen Betriebsarten des Umwandlers.

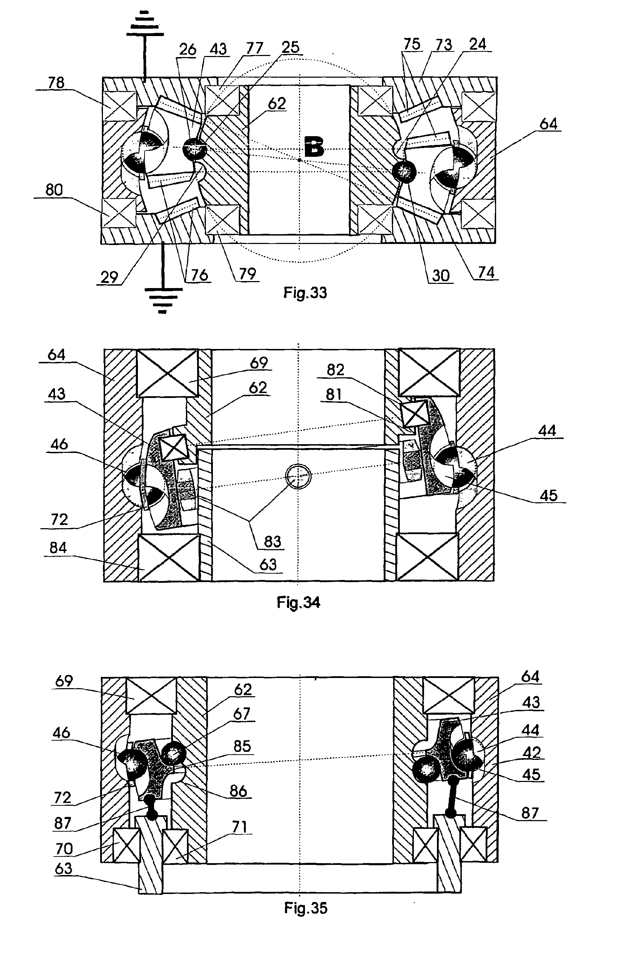

Bei der Konstruktion des Umwandlers in **Fig. 33** ist die Welle 63 ein Gehäuseteil und mit zwei Flanschen 73 und 74 gebildet, die miteinander und mit dem Gehäuse verbunden sind. Die Taumelscheibe 43 ist mit den Flanschen 73 und 74 durch zwei Seitenzahnradgetriebe 75 und 76 verbunden. Der Einsatz von zwei Zahnradgetrieben als Drehübertragungsvorrichtung erhöht die Anzahl der miteinander zusammenwirkenden Zähne und erhöht das Übertragungsmoment. Die Wellen 62 und 64 sind in den Flanschen 73 und 74 mit Hilfe von Lagern 77, 78, 79 und 80 eingebaut. Als Vorrichtung zur Umwandlung der Wälzbewegung der Scheibe 43 in eine Drehung der Welle 62 und umgekehrt wird eine koaxiale Reibungs-Planetenübertragungsvorrichtung eingesetzt, die derjenigen Vorrichtung analog ist, die in **Fig. 10** gezeigt ist. In der Vorrichtung greifen zwei Ringnuten 24 und 29 auf der Welle 62 über zwei Kugeln 26 und 30 in die Nut 25 auf der Taumelscheibe 43 ein. Statt dieser Vorrichtung kann jede der oben beschriebenen koaxialen Reibungs-Planetenvorrichtungen verwendet werden.

Die Varianten der Umwandler in **Fig. 34 und 35** unterscheiden sich durch die Vorrichtungen zur Umwandlung der Drehung der Welle 62 in eine Wälzbewegung der Scheibe 43 und durch die Vorrichtungen zur Übertragung der Drehung der Taumelscheibe 43 an die Welle 63 unabhängig vom Wälzen der Scheibe. Bei dem Umwandler in **Fig. 34** ist die erste der genannten Vorrichtungen auf der Basis einer schrägen Kurbel 81 auf der Welle 62 ausgebildet, auf die die Scheibe 43 mittels des Lagers 82 eingesetzt ist. Für die Übertragung der Kraft von der schrägen Kurbel auf die beiden Halbperioden des Wälzens der Scheibe ist es zweckmäßig, das Lager 82 als Radial-Axial-Vierpunkt-Lager auszuführen. Die Vorrichtung zur Übertragung der Drehung weist ein Kreuzstück 83 auf, durch das die Taumelscheibe 43 mit der Hohlwelle 63 verbunden ist. Lager 69 und 84 zentrieren die Wellen 62, 63 und 64 zueinander. Die Vorrichtung zur Umwandlung der Wälzbewegung der Scheibe 43 in eine Drehung der Welle 62 in **Fig. 35** ist der Vorrichtung in **Fig. 32** ähnlich, mit dem Unterschied, dass der Ringvorsprung 85 auf der Scheibe 43 und die Ringbahn 86 auf der Seitenfläche der Welle 62 ausgebildet ist. Als Vorrichtung zur Übertragung der Drehung in **Fig. 35** ist ein System von flexiblen Zugstangen oder Gelenken 87 verwendet, das der Scheibe 43 erlaubt, unabhängig von der Drehung der Welle 63 zu wälzen.

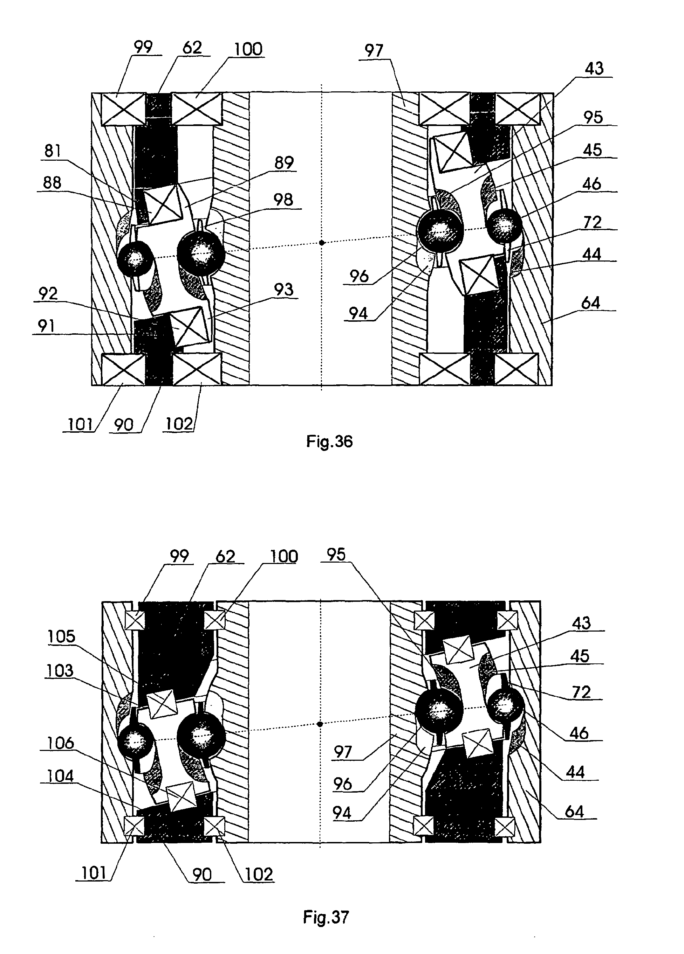

In den zweistufigen koaxialen Umwandlern der Geschwindigkeit in **Fig. 36 und 37** sind die Drehübertragungsvorrichtungen beider Stufen auf einer Taumelscheibe 43 realisiert. Eine der Drehübertragungsvorrichtungen ist durch die periodischen Wälzbahnen 45 und 44 auf den Seitenflächen der Taumelscheibe 43 und der Hohlwelle 64, die der Rahmen der Drehübertragungsvorrichtung ist, und durch die Kugelkette 46 gebildet. Die Vorrichtung zur Umwandlung der Drehung der Welle 62 in eine Wälzbewegung der Scheibe 43 weist eine schräge Kurbel 81 auf, auf die die Taumelscheibe 43 über ein Radial-Axial-Vierpunkt-Lager 88 mit einem Bördelrand 89 eingesetzt ist. Für den sicheren Sitz der Scheibe von der gegenüberliegenden Kante des Umwandlers ist eine analoge Welle 90 mit einer schrägen Kurbel 91 eingeführt, auf die über das gleiche Lager 92 mit einem Bördelrand 93 die gegenüberliegende Kante der Scheibe 43 eingesetzt ist.

Die Drehübertragungsvorrichtung der zweiten Stufe ist durch periodische Wälzbahnen 94, 95 und eine Kugelkette 96 gebildet. Die Wälzbahn 95 ist auf der Seitenfläche der Scheibe 43 angeordnet, die der Fläche mit der Bahn 45 der ersten Drehübertragungsvorrichtung entgegengesetzt ist. Die Wälzbahn 94 ist auf der Seitenfläche der Hohlwelle 97 ausgebildet, die der Taumelscheibe 43 zugewandt ist. Mit den Bezugszeichen 72 und 98 sind Separatoren der Drehübertragungsvorrichtungen beider Stufen bezeichnet. Die Wellen 62, 64, 90 und 97 des Umwandlers sind in eine einheitliche Vorrichtung durch Lager 99, 100, 101 und 102 zusammengefasst, die an den Kanten des Umwandlers angeordnet sind. Die Wellen 62 und 90 drehen sich wie eine einzige Welle und rufen die Wälzbewegung der Scheibe 43 hervor. Die Variante des Umwandlers der Geschwindigkeit nach der **Fig. 37** unterscheidet sich von der Variante in **Fig. 36** nur durch die Vorrichtungen zur Umwandlung der Wälzbewegung der Schiebe 43 in eine Drehung der Welle 62 und umgekehrt. Der Umwandler weist Stirnkurven 103 und 104 auf einander zugewandten Kanten der Wellen 60 und 90 auf, die mit den Kanten der Taumelscheibe 43 über Axial-Stirnseite-Lager 105 und 106 zusammenwirken. Die Verwendung von zwei gegenüberliegenden Stirnkurven sichert auch die Übertragung der Kraft in zwei Halbperioden des Wälzens der Scheibe 43. Damit unterscheidet sich dieser Umwandler vorteilhaft von den Umwandlern in der Patenanmeldung W08201043, bei der alle Vorrichtungen zum Wälzen der Scheibe nur in einer Halbperiode arbeiten.

Der zweistufige Umwandler arbeitet in folgender Weise. Bei der Drehung einer der Wellen des äußeren Antriebs, z. B. der Welle 62 (zusammen mit der Welle 90), beginnt die Scheibe 43 zu wälzen. Die Drehung der Eingangswelle wird an die Taumelscheibe nicht übertragen, denn diese ist mit der Welle durch die Lager 88, 92 oder 105, 106 gelöst. Diese Bewegung der Scheibe 43 durch das Zusammenwirken der Wälzbahnen 44 und 45 mit den Kugeln 46 ruft eine Umkehr der Taumelscheibe 43 gegenüber der Welle 64 um den Winkel hervor, der durch das Verhältnis der Perioden der Wälzbahnen 44 und 45 bestimmt wird. Bei der Einhaltung der Bedingung der Selbstverklemmung der Kugeln 46 gegenüber den Bahnen 44 und 45 rollen diese Kugeln auf den Wälzbahnen ohne Durchrutschen. Die Drehübertragungsvorrichtung der zweiten Stufe, die durch die periodischen Wälzbahnen 94 und 95 und die Kugeln 96 gebildet ist, arbeitet in der gleichen Weise. Das Eingangsglied ist aber für sie die Taumelscheibe 43, die gleichzeitig wälzt und sich dreht. In dieser Weise erfüllt für die erste Stufe des Umwandlers die Funktion der Vorrichtung, die die Drehung an die Taumelscheibe 43 überträgt, die Drehübertragungsvorrichtung der zweiten Stufe. Die Eingangswelle des Umwandlers ist in diesem Fall die Welle 97, deren Geschwindigkeit der Drehung gegenüber der Eingangswelle 62 durch die Geschwindigkeit der Drehung der Welle 64 und durch das Verhältnis der Anzahl der Perioden der Wälzbahnen von Drehübertragungsvorrichtungen der ersten und der zweiten Stufen bestimmt wird. Es ist zu bemerken, dass als Eingangs- und Ausgangswellen jede der Wellen 62 (sie ist auch 90), 64 und 97 arbeiten können. Der Umwandler arbeitet dabei als Multiplikator oder Getriebe (bei einer unbeweglichen Welle) oder als Differenzwandler der Geschwindigkeit in Abhängigkeit vom Verhältnis der Geschwindigkeiten auf zwei Eingangswellen.

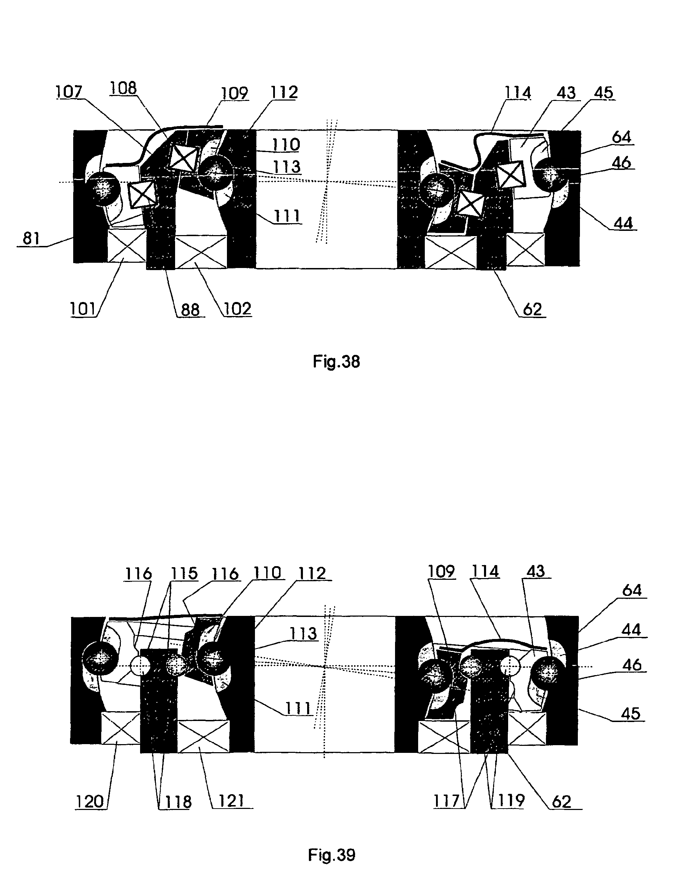

Die koaxialen, zweistufigen Umwandler in den **Fig. 38 und 39** sind von zwei Drehübertragungsvorrichtungen gebildet, die ineinander angeordnet sind.

Die Drehübertragungsvorrichtung der ersten Stufe wird durch die Taumelscheibe 43 mit einer periodischen Wälzbahn 45, der Hohlwelle-Lager 64 mit der periodischen Bahn 44 und der Kugelketten 46 gebildet. Die Vorrichtung zur Umwandlung der Wälzbewegung der Scheibe in eine Drehung der Scheibe 62 weist eine schräge Kurbel S1 mit dem Radial-Axial-Vierpunkt-Lager 88 auf, in das die Scheibe 43 eingesetzt ist. Die entgegengesetzte Seitenfläche der Welle 62 ist mit einer schrägen Kurbel 107 versehen, innerhalb der eine Taumelscheibe 109 der zweiten Stufe auf dem gleichen Lager 108 gesetzt ist. Auf der inneren Seitenfläche der Scheibe 109 ist die Drehübertragungsvorrichtung der zweiten Stufe realisiert, die durch periodische Wälzbahnen 110 und 111 auf der Scheibe 109 und auf einer Hohlwelle 112 sowie auch durch eine Kugelkette 113 gebildet ist. Die schrägen Kurbeln 81 und 107 können eine entgegengesetzte Neigung wie in **Fig. 38** gezeigt, oder eine gleiche Neigung aufweisen. Die Scheiben 43 und 104 wälzen jeweils in der Gegenphase oder synchron. Die erste Variante wird mehr bevorzugt, weil in dieser Variante die Scheiben hinsichtlich der Masse gegenüber der Achse des Umwandlers ausgewuchtet sind. Die Scheiben 43 und 109 sind miteinander durch die Drehübertragungsvorrichtung unabhängig von der Wälzbewegung verbunden. In den Figuren weist diese Vorrichtung einen flexiblen Ring 114 auf. Die Wellen 62, 64 und 112 sind an den Kanten durch die Lager 101 und 102 verbunden.

Der Umwandler in **Fig. 39** unterscheidet sich durch die Vorrichtungen zur Umwandlung der Wälzbewegung der Scheiben 43 und 109 in eine Drehung der Welle 62. Diese Vorrichtungen sind als Reibungs-Planeten-Drehübertragungsvorrichtungen mit Wälzbahnen 115 auf gegenüberliegenden Seitenflächen der Welle 62, mit zwei dem Äquator parallelen Wälzbahnen 116 und 117 auf jeder der Taumelscheiben und mit zwei Paaren von diamentral entgegengesetzten Kugeln 118 und 119 auf diesen Wälzbahnen ausgebildet. Mit den Bezugszeichen 120 und 121 sind die Lager gekennzeichnet, durch die die Wellen 62, 64 und 112 des Umwandlers gegeneinander fixiert werden.

Die Arbeitsweise dieser zweistufigen Umwandler ist der der vorhergehenden Umwandler analog.

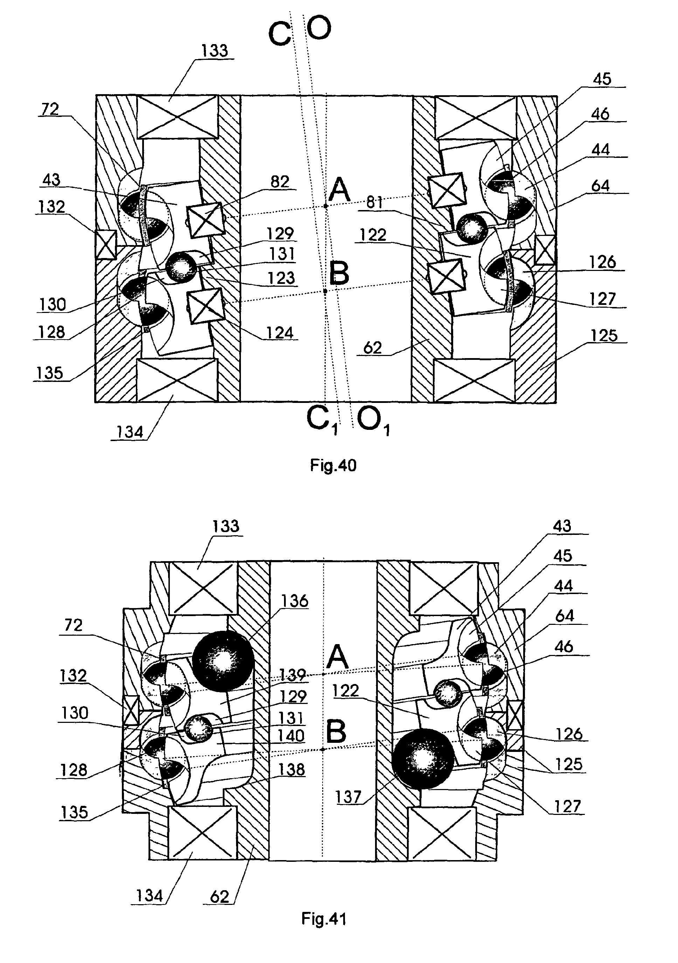

Im zweistufigen Umwandler mit einer konsequenten Anordnung der Stufen in **Fig. 40** ist die Drehübertragungsvorrichtung der ersten Stufe durch eine Taumelscheibe 43 und durch die Welle 64 mit Kugeln 46 in den Wälzbahnen 44, 45 gebildet. Die Vorrichtung der zweiten Stufe ist durch die Taumelscheibe 122 gebildet, die auf eine zweite schräge Kurbel 123 auf der Welle 62 durch Radial-Axial-Vierpunkt-Lager 124 gesetzt ist. Die Scheiben 43 und 122 verlaufen zueinander parallel. Die Scheibe 122 wird von einer Hohlwelle 125 umfasst, die das Lager der Drehübertragungsvorrichtung der zweiten Stufe ist. Auf den einander zugewandten Oberflächen der Taumelscheibe 122 und des Lagers 125 sind periodische Wälzbahnen 126 und 127 gebildet. In den Wälzbahnen ist eine Kugelkette 128 angeordnet. Die Taumelbewegungsachsen OO, $CC_1$ der Taumelscheiben 43 und 122 verlaufen parallel zueinander und sind exzentrisch gegeneinander verschoben. Deshalb stellt die Vorrichtung zur Übertragung der Drehung von einer Scheibe zur anderen in dieser Konstruktion eine Vorrichtung zur Übertragung der Drehung zwischen den parallelen Wellen in Form einer parallelen Kugelkurbel dar. Die Vorrichtung weist Aushöhlungen 129 und 130 auf den Kantenoberflächen der Taumelscheiben 43 und 122 auf, die durch Kugeln 131 ineinander eingreifen. Die Achsen der Aushöhlungen sind größer als der Duchmesser der Kugeln 131, und zwar um den Wert der Verschiebung der Achsen gegeneinander der Taumelscheiben 43 und 122 bei deren synchronen Taumelbewegung gegen den Punkt A und B. Bei der Taumelbewegung der Scheiben erlauben die Kugeln 131, die in den Aushöhlungen 129 und 130 abwälzen, den Scheiben 43 und 122, sich zu drehen. In dieser Weise ruft die Drehung einer Scheibe die Drehung der anderen Scheibe hervor, dabei erlauben die Kugeln 131 den Flächen der Scheiben, sich gegeneinander zu verschieben, wobei die Möglichkeit der Taumelbewegung jeder Scheibe gegenüber dem eigenen Zentrum beibehalten wird.

Die Hohlwellen 64 und 125 können sich unabhängig von einander aufgrund der dazwischen angeordneten Lager 132 drehen. Alle drei Wellen 62, 64 und 125 des Umwandlers sind in eine einheitliche Vorrichtung über Lager 133 und 134 zusammengefasst. Mit dem Bezugszeichen 135 ist ein Separator der Drehübertragungsvorrichtung der zweiten Stufe bezeichnet.

Die nächste Konstruktion des zweistufigen Umwandlers, die in **Fig. 41** dargestellt ist, unterscheidet sich durch die Vorrichtung zur Umwandlung der Drehung der Welle 62 in eine Wälzbewegung der Scheiben 43 und 122. Diese Vorrichtung enthält zwei diametral entgegengesetzte Kugeln 136 und 137, die zwischen der Wälzbahn 138 auf der äußeren Seitenfläche der Welle 62 und den Ringvorsprüngen 139 und 140 der Scheiben 43 und 122 angeordnet sind. Für die Vereinfachung der Montage ist er Rahmen 125 gemäß der Linie auseinandernehmbar ausgeführt, die die periodische Wälzbahn 126 in zwei symmetrische Teile trennt. Die Wellen 62, 64 und 125 werden durch Lager 132, 133 und 134 verbunden.

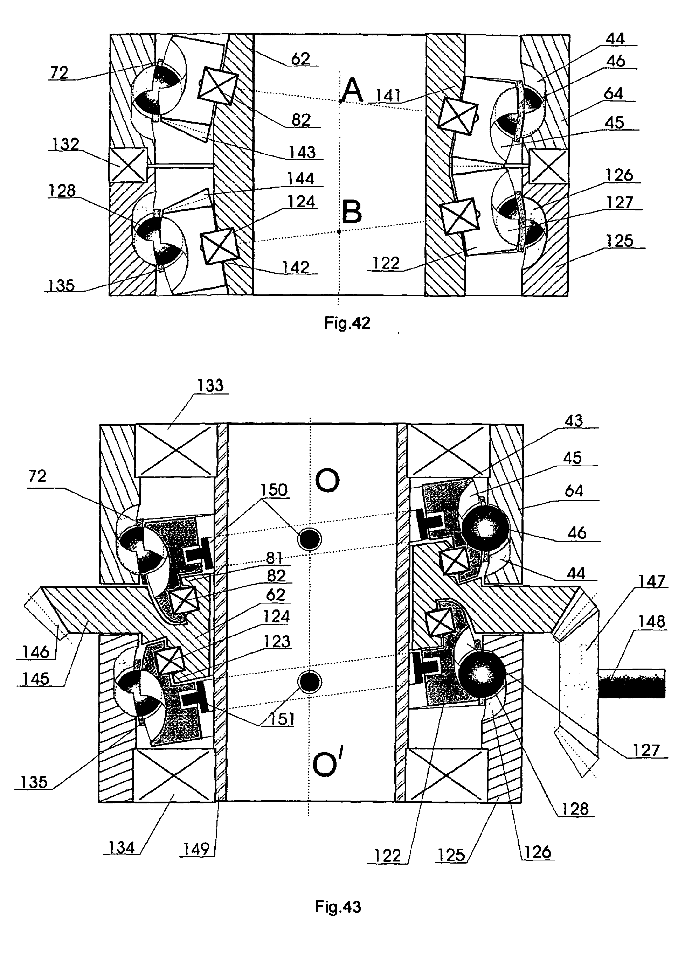

Die Variante des zweistufigen Umwandlers in **Fig. 42** weist Scheiben 43 und 122 auf, die in der Gegenphase wälzen. Dazu sind auf der Welle 62 schräge Kurbeln 141 und 142 mit einer Gegenneigung ausgebildet. Die Verbindung zwischen den Rahmen erfolgt durch Kegelzahnräder 143 und 144. Alle anderen Bezeichnungen in **Fig. 42** entsprechen den Bezeichnungen der **Fig. 40 und 41**.

Der zweistufige Umwandler in **Fig. 43** unterscheidet sich durch die originale Konstruktion der Vorrichtungen zur Umwandlung der Drehung der Welle 62 in eine Wälzbewegung der Scheiben 43 und 122 sowie der Vorrichtung zur Übertragung der Drehung zwischen den Scheiben 43 und 122 unabhängig von ihrer Taumelbewegung. Die Welle 62 ist als Rahmen mit den schrägen Kurbeln 81 und 123 auf der äußeren Seitenfläche ausgeführt und hat im mittleren Teil einen äußeren Ringvorsprung 145, der über die Wellen 64 und 125 herausragt. Der äußere Kranz des Ringvorsprungs 145 ist als konisches Zahnrad 146 ausgeführt, das mit einem Rad 147 auf einer Welle 148 verbunden ist. Durch diese Vorrichtung wird die Drehung zwischen den kreuzenden Wellen 62 und 148 übertragen. Bei diesem Umwandler kann die Leistungsentnahme gleichzeitig von den Rahmen 64 und 125 vorgenommen werden; deshalb ist der Umwandler als Getriebe der Hinterachse in einem Kraftfahrzeug sehr wirksam. Innerhalb der Welle 62 und der Taumelscheiben 43 und 122 läuft eine Hohlwelle 149 durch, die durch zwei Kreuzstücke 150 und 151 mit den Scheiben 43 und 122 verbunden ist.

Das Kreuzstück erlaubt zwei Scheiben durch die Übertragung der Drehung von Scheibe zu Scheibe frei zu wälzen. Mit den Bezugzeichen 133 und 134 sind wie auf den vorhergehenden Figuren die Lager bezeichnet, die die Elemente des Umwandlers miteinander verbinden.

Der zweistufige Umwandler mit einer konsequenten Anordnung der Stufen arbeitet folgendermaßen.

Angenommen wird, dass die Welle und der Rahmen 64 der Drehübertragungsvorrichtung der ersten Stufe unbeweglich befestigt sind. Bei der Drehung der Welle 42 mit einer Winkelgeschwindigkeit $\omega_1$ führt die Taumelscheibe die Taumelbewegung mit der gleichen Geschwindigkeit aus, und durch die Einwirkung auf die Kugeln 46 lässt sie die Kugeln ohne Durchrutschen die unbewegliche Wälzbahn 44 auf dem Rahmen 64 mit einer Geschwindigkeit $\omega_2$ abwälzen, die von der Wälzbahn abhängt.

Die Abwälzbewegung der Kugeln 46 ruft ihrerseits die Umkehr der Scheibe 43 gegenüber der Kugelkette hervor, die von der Anzahl der Perioden der Wälzbahn 45 der Taumelscheibe 43 abhängt. Gegenüber den unbeweglichen Rahmen 64 (gegen das Gehäuse) dreht sich die Scheibe 43 mit einer Winkelgeschwindigkeit $\omega_2$, die eine Funktion der Anzahl der Perioden der Wälzbahnen 44 auf den Rahmen 64 und 65 auf der Scheibe 43 ist. Mit den Kugeln 131 der parallelen Kurbel, den Radzähnen 143 und 144 oder mit der Welle 149 mit Kreuzstücken 150 und 151 wird diese Drehung an die Scheibe 122 übertragen, die gleichzeitig mit der Drehung mit der Winkelgeschwindigkeit $\omega_1$ taumelt.

Die Kugeln 128 der zweiten Drehübertragungsvorrichtung, die mit der Wälzbahn 126 auf der Scheibe 122 und der Bahn 127 auf dem Rahmen 125 zusammenwirken, rufen die Umkehr der letzten Bahn gegenüber der Scheibe 122 um denjenigen Winkel hervor, der durch das Verhältnis der Perioden der Wälzbahnen 126 und 127 bestimmt wird. Die Gesamtumkehr der getriebenen Wellenrahmen 125 hängen von $\omega_1$, $\omega_2$ und $\omega_3$ ab und wird letztendlich durch die Anzahl der Perioden aller vier Wälzbahnen auf den Taumelscheiben und Rahmen der Drehübertragungsvorrichtungen beider Stufen bestimmt. Wenn sich die Welle 64 dreht, d. h. die zweite Eingangswelle, so hängt die Eingangsgeschwindigkeit auch vom Verhältnis der Eingangsgeschwindigkeiten der Wellen 62 und 64 ab. Das Zentrum der Taumelbewegung der Kugelketten 46 ist der Punkt A und das Zentrum der Taumelbewegung der Kugelketten 128 ist der Punkt B, der mit dem Symmetriezentrum der jeweiligen Scheiben übereinstimmt. D. h., die Taumelbewegung jeder Kugelkette erfolgt gegenüber demjenigen Punkt, der in der Fläche dieser Kette liegt, wodurch die Anforderungen an das Profil der periodischen Wälzbahnen bedeutend vereinfacht werden.

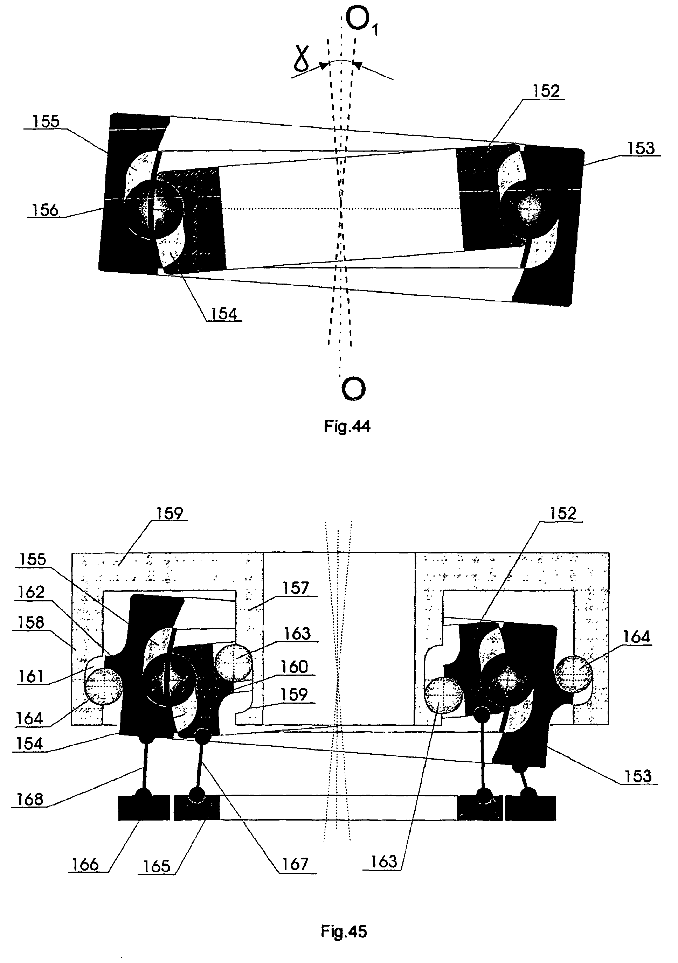

In **Fig. 44** ist eine Drehübertragungsvorrichtung gezeigt, bei der die beiden Rahmen 152 und 153 mit der Möglichkeit der Taumelbewegung ausgeführt sind und bei der diese Rahmen die Taumelscheiben sind. Wie in den Drehübertragungsvorrichtungen in **Fig. 20** sind auf den einander zugewandten Seitenoberflächen der Rahmen in Form eines kugelförmigen Gürtels periodische Wälzbahnen 154 und 155 gebildet, an deren Kreuzungen eine Kugelkette 156 angeordnet ist. Bei dieser Drehübertragungsvorrichtung beträgt bei einem gemeinsamen Neigungswinkel $\gamma$ zwischen den Scheiben der Neigungswinkel jeder Scheibe zur Achse OO$_1$ y/2. D. h. der Winkel der Taumelbewegung jeder Scheibe ist um die Hälfte vermindert, wodurch günstigere Bedingungen für den Betrieb der Vorrichtung, die die Taumelbewegung der Scheiben erregt, und für die Drehübertragungsvorrichtung geschaffen sind..

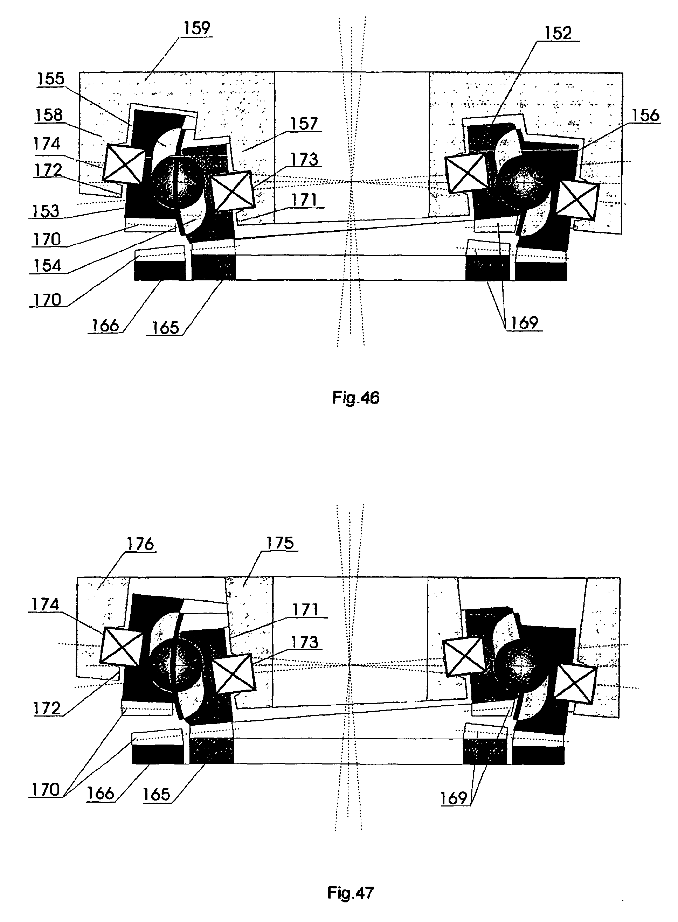

In den **Figuren 45 und 46** sind Schemas der Umwandler der Geschwindigkeit gezeigt, in denen die Scheiben 152 und 153 aufeinander wälzen, d. h. sie taumeln in Gegenphase. Diese Taumelbewegung sichert die Vorrichtung, die zwei Hohlwellen 157 und 158 aufweist, die untereinander durch einen Flansch 159 verbunden sind. Eine Welle 157 ist innerhalb der Drehübertragungsvorrichtung angeordnet, und eine Welle 158 befindet sich außerhalb dieser. Auf den einander zugewandten Seitenoberflächen der Welle 157 und der Scheibe 152 ist eine geschlossene Ringnut 159 vorhanden und ein Ringvorsprung 160 angeordnet. Eine analoge Nut 161 und ein Vorsprung 162 sind auf den einander zugewandten Oberflächen eines anderen Paars Welle 158 und Taumelscheibe 153 vorgesehen. Zwischen der Seitenwand der Nut 159 und dem Ringvorsprung 160 der einen Seite der Scheibe 152 und zwischen der Gegenwand der Nut 159 und der Gegenseite des Vorsprungs 160 sind auf der diametral gegenüberliegenden Seite zwei Kugeln 163 eingesetzt.

Zwischen der Nut 161 und dem Vorsprung 160 sind genauso zwei Kugeln 164 eingesetzt. Die Kugeln 163 und 164 liegen derart zueinander, dass sie die Gegenneigung der Scheiben 152 und 153 sicherstellen. Die Scheiben 152 und 153 sind mit Hohlwellen 165 und 166 durch die Drehübertragungsvorrichtungen zwischen den nicht fluchtenden Wellen verbunden. In **Fig. 45** ist ein System von Hebeln oder Zugstangen 167 und 168 vorhanden, und in den **Figuren 46 und 47** werden diese Vorrichtungen in Form eines Kegelzahnradgetriebes 169 und 170 gebildet.

Die Vorrichtung zur Umwandlung der Wälzbewegung der Scheiben 152 und 153 in eine Drehbewegung der miteinander verbundenen Wellen 157 und 158 in **Fig. 46** weist zwei schräge Kurbeln 171 und 172 mit einer Gegenneigung auf den den Taumelscheiben zugewandten Seitenflächen der Wellen 157 und 158 auf. Die Taumelscheiben 152 und 153 sind auf die Kurbelwellen 171 und 172 durch ein Radial-Axial-Vierpunkt-Lager 173 und 174 eingesetzt.

Die Arbeitsweise des Umwandlers der Geschwindigkeit in den **Figuren 45 und 46** unterscheidet sich praktisch von der Arbeitsweise des Umwandlers, die in den **Figuren 33 und 34** gezeigt ist. Eine der Wellen 165 und 166 ist das Ausgangsglied, die andere wird unbeweglich befestigt. Die Leistungsentnahme erfolgt immer über die Drehübertragungsvorrichtung zwischen den nicht fluchtenden Wellen; diese Vorrichtung ist für einen kleineren Neigungswinkel der Welle ausgelegt als beim Umwandler mit einer Taumelscheibe. Außerdem ist der Winkel der Taumelbewegung jeder der Taumelscheiben bei gleichen Bedingungen um die Hälfte verringert, d. h., die Vorrichtung zur Umwandlung der Wälzbewegung der Scheibe in eine Drehbewegung und umgekehrt arbeitet bei kleineren Winkeln.

Der Umwandler der Geschwindigkeit in **Fig. 47** weist zwei sich unabhängig drehende Hohlwellen 175 und 176 mit schrägen Kurbeln auf, die innerhalb und außerhalb der Drehübertragungsvorrichtung angeordnet sind. Die Taumelscheibe 152 und 153 sind auf die schrägen Kurbeln über Lager 173 und 174 eingesetzt. Kurbelwellen 175 und 176 bilden zwei Eingänge des Umwandlers; die Lager 165 und 166 können als Ausgänge dienen. Wenn sich die Eingangswellen mit der gleichen Geschwindigkeit und in der gleichen Richtung drehen und wenn die schrägen Kurbeln die gleiche Neigung haben, so wälzen sich die Scheiben 152 und 153 ohne Drehung in einer Richtung als eine Einheit. Gegeneinander liegen sie unbeweglich, und die Ausgangsgeschwindigkeit des Umwandlers ist Null. Bei der Änderung der Drehrichtung einer der Eingangswellen in die umgekehrte Richtung überträgt der Umwandler das Drehmoment mit einem Übertragungsverhältnis, das durch das Verhältnis der Perioden der Wälzbahn auf jeder der Scheiben bestimmt wird. In dieser Weise erhält der Umwandler der Geschwindigkeit zusätzliche Funktionen einer Schaltkupplung.

Bei den in der vorliegenden Patentanmeldung beschriebenen Drehübertragungsvorrichtungen mit einer Taumelscheibe fehlt also die Gleitreibung der eingreifenden Elemente, wodurch die Wirksamkeit erhöht wird und der Lärm und der Verschleiß der Bahnen und Wälzkörper verringert werden. Die mannigfaltigen Schemas der Umwandler der Geschwindigkeit mit solchen Drehübertragungsvorrichtungen sind nach dem Prinzip eines Lagers aufgebaut, d. h., sie bestehen aus einigen gleichachsigen Rahmen, wobei jeder Rahmen als Eingangs- (oder Ausgangs-) und Ausgangswellen (oder Eingangswelle) oder als Gehäuse dienen kann. Jedes der oben beschriebenen Elemente kann getrennt oder zusammen verwendet werden, wobei Konstruktionen unterschiedlicher Anwendung gebildet werden, aber sie gehen über die Grenzen des Wesens der vorliegenden Erfindung nicht hinaus.

**Patentansprüche**

1. Drehübertragungsvorrichtung mit einer Taumelscheibe, wobei diese Vorrichtung zwei Drehkörper aufweist, von denen einer eine Taumelbewegung ausführen kann, d. h., zwei unabhängige Bewegungen stattfinden, und zwar ein Wälzen gegenüber dem anderen Wälzkörper und eine Drehung um die eigene Achse, die zur Achse des anderen Wälzkörpers geneigt ist und die die Taumelscheibe ist, wobei ferner auf den einander zugewandten Oberflächen der Drehkörper geschlossene Ringwälzbahnen vorgesehen sind, die miteinander durch Wälzkörper zusammenwirken, die im ständigen Kontakt mit den Wälzbahnen auf den beiden Teilen stehen, und wobei der Neigungswinkel der Taumelscheibe derart ausgewählt ist, dass die Bahnen an der Kontaktstelle mit den Wälzkörpern zueinander eine Neigung aufweisen, die geringer als der oder gleich dem Winkel der Selbstverklemmung der Wälzkörper ist.

2. Drehübertragungsvorrichtung nach Anspruch 1, **dadurch gekennzeichnet,** **dass** der Neigungswinkel der Wälzbahnen zueinander im Bereich von 0,1 bis 10 Grad liegt.

3. Drehübertragungsvorrichtung nach Anspruch 1 oder 2, **dadurch gekennzeichnet,** **dass** die Wälzbahnen ein derartiges Profil aufweisen, dass die Kontaktzonen der Wälzkörper mit den Wälzbahnen in unterschiedlichen Abständen von der Drehachse der Drehkörper angeordnet sind.

4. Drehübertragungsvorrichtung nach einem der Ansprüche 1 bis 3, **dadurch gekennzeichnet,** **dass** die Drehkörper als Scheiben mit geschlossenen Ringwälzbahnen auf den einander zugewandten flachen Flächen ausgebildet sind, die miteinander durch einen Wälzkörper in Kontakt stehen.

5. Drehübertragungsvorrichtung nach Anspruch 4,
**dadurch gekennzeichnet,**
**dass** der Neigungswinkel der Taumelscheibe im Bereich von 0,2 bis 15 Grad liegt.

6. Drehübertragungsvorrichtung nach Anspruch 4,
**dadurch gekennzeichnet,**
**dass** der Wälzkörper als Kugel ausgebildet ist und die Seitenwände der Wälzbahnen elastisch unbeweglich gegeneinander ausgebildet sind.

7. Drehübertragungsvorrichtung nach einem der Ansprüche 1 bis 3,
**dadurch gekennzeichnet,**
**dass** die Drehkörper als Rahmen und Taumelscheibe ausgeführt sind, die sich beide umfassen und deren seitlich einander zugewandte Flächen als kugelförmige Gürtel mit dem Mittelpunkt der Kugel im Zentrum der Taumelbewegung der Taumelscheibe ausgebildet sind, dass als Wälzkörper Kugeln dienen, dass jede der Wälzbahnen auf der Taumelscheibe und dem Rahmen auf dem kugelförmigen Gürtel als System von zueinander parallelen, geschlossenen Ringnuten ausgebildet ist, die in Flächen liegen, die senkrecht zur Drehachse des jeweiligen Teils stehen, und dass die Kugeln an der Kreuzung der Nuten der Taumelscheibe mit den Rahmennuten angeordnet sind.

8. Drehübertragungsvorrichtung nach Anspruch 7,
**dadurch gekennzeichnet,**
**dass** die Wälzbahn auf der Taumelscheibe als geschlossene Ringnut ausgeführt ist, die auf der Äquatoriallinie der Scheibe angeordnet ist.

9. Drehübertragungsvorrichtung nach Anspruch 8,
**dadurch gekennzeichnet,**
**dass** auf dem Rahmen eine Ringnut gebildet ist, die von der Linie des Kugelgroßkreises um einen Abstand verschoben ist, der der Hälfte des Ausschlags der Taumelscheibe entspricht, und die mit einer Kugel in die Wälzbahn der Scheibe eingreift.

10. Drehübertragungsvorrichtung nach Anspruch 8,
**dadurch gekennzeichnet,**
**dass** auf dem Rahmen zwei Ringnuten gebildet sind, die auf den unterschiedlichen Seiten des Kugelgroßkreises in einem Abstand angeordnet sind, der der Hälfte des Ausschlags der Taumelscheibe entspricht, und dass die Ringnuten mit zwei diametral gegenüberliegenden Kugeln in die Wälzbahn auf der Taumelscheibe eingreifen.

11. Drehübertragungsvorrichtung nach Anspruch 8,
**dadurch gekennzeichnet,**

**dass** auf dem Rahmen eine Ringnut gebildet ist, die auf der Linie des Kugelgroßkreises liegt und die mit zwei diametral gegenüberliegenden Kugeln in die Wälzbahn auf der Taumelscheibe eingreift.

12. Drehübertragungsvorrichtung nach Anspruch 8,
**dadurch gekennzeichnet,**
**dass** auf dem Rahmen drei Ringnuten angeordnet sind, von denen eine an der Linie des Kugelgroßkreises verläuft und die zwei anderen seitlich von der ersten um einen Abstand entfernt liegen, der der Hälfte des Ausschlags der Taumelscheibe entspricht, und dass diese Ringnuten in die Nut auf der Taumelscheibe mit vier je zu zwei diametral liegenden Kugeln eingreifen.

13. Drehübertragungsvorrichtung nach Anspruch 7,
**dadurch gekennzeichnet,**
**dass** die Wälzbahn auf dem Rahmen als Ringnut auf der Äquatoriallinie des Rahmens ausgeführt ist und dass die Nuten auf der Taumelscheibe zwei Nuten aufweisen, die von der Äquatoriallinie der Scheibe um einen Abstand entfernt sind, der der Hälfte des Ausschlags der Taumelscheibe entspricht.

14. Drehübertragungsvorrichtung nach Anspruch 7,
**dadurch gekennzeichnet,**
**dass** im System der Ringnuten auf dem Rahmen mindestens eine der Nuten auf einem einzelnen, sich unabhängig drehenden Element des Rahmens gebildet ist.

15. Drehübertragungsvorrichtung mit einer Taumelscheibe, wobei diese Vorrichtung zwei einander umfassende Drehkörper aufweist, von denen einer eine Taumelscheibe ist und der andere ein Rahmen ist, dass die seitlichen Paarflächen der Taumelscheibe und des Rahmens kugelförmige Gürtel mit dem Mittelpunkt der Kugel im Zentrum der Taumelbewegung der Taumelscheibe ausgebildet sind, dass im Äquatorbereich des kugelförmigen Gürtels auf dem Rahmen und auf der Taumelscheibe nach dem Azimut periodische Wälzbahnen vorgesehen sind, von denen mindestens eine geschlossen und in Achsenrichtung wellenförmig gebogen ausgebildet ist, und dass die Bahnen durch die Kugelketten ineinander eingreifen, die an der Kreuzung der Wälzbahnen angeordnet sind, die sich dadurch unterscheiden, dass die Bahnen an der Stelle des Kontakts mit Kugeln zueinander eine Neigung aufweisen, die kleiner als der oder gleich dem Winkel der Selbstverklemmung der Kugeln ist.

16. Drehübertragungsvorrichtung nach Anspruch 15,
**dadurch gekennzeichnet,**
**dass** der Neigungswinkel $\alpha$ der Front der periodischen Wälzbahn zum Äquator auf der Taumelscheibe und der jeweilige Winkel β auf dem Rahmen zum Neigungswinkel γ der Taumelscheibe in folgenden Verhältnissen stehen:

$$\alpha\text{-}\beta\text{-}\gamma \leq 10,\ \text{bei}\ \alpha \geq \beta;$$

$$\beta\text{-}\alpha\text{+}\gamma\ 10,\ \text{bei}\ \alpha > \beta.$$

**17.** Drehübertragungsvorrichtung nach Anspruch 15 oder 16,
**dadurch gekennzeichnet,**
**dass** die Periodenanzahl der Wälzbahnen $N_1$ und $N_2$ und die Anzahl der Kugeln im folgenden Verhältnis stehen:

$$N_1 = kn \pm 1;$$

$$N_2 = qn \pm 1,$$

wobei *k* und *q* ganze Zahlen oder Zahlen der Art 1/m sind, wobei *m* die Zahl ist, auf die die Anzahl der Kugeln ohne Rest teilbar ist.

**18.** Drehübertragungsvorrichtung nach Anspruch 15 oder 16,
**dadurch gekennzeichnet,**
**dass** die Wälzbahn auf einem Drehkörper nicht geschlossen und als ein System der auf einer Kreislinie verteilten Nuten ausgeführt ist, die auf den Kugelmeridianen verlaufen.

**19.** Drehübertragungsvorrichtung nach Anspruch 15 oder 16,
**dadurch gekennzeichnet,**
**dass** die beiden Wälzbahnen geschlossen und in Achsenrichtung wellenförmig gebogen ausgeführt sind.

**20.** Drehübertragungsvorrichtung nach Anspruch 15 oder 16,
**dadurch gekennzeichnet,**
**dass** die Wälzbahn auf einem Rahmen angeordnet ist, dass der Rahmen an der Mittellinie der gebogenen Wälzbahn geschnitten ist, wobei zwei sich unabhängig drehende Rahmenelemente gebildet werden, und dass die Wälzbahn auf jedem Element ein System von Halbwellen darstellt, die mit einer unterschiedlichen Periodenanzahl ausgebildet sind.

**21.** Differenzwandler der Geschwindigkeit mit mindestens drei Wellen und einer Vorrichtung, die nach einem der Ansprüche 1 bis 20 ausgebildet ist und bei der die Taumelscheibe mit einer der Wellen durch eine Vorrichtung zur unabhängigen Umwandlung ihrer Wälzbewegung in eine Drehbewegung und umgekehrt verbunden ist, wobei mit der zweiten der Wellen die Taumelscheibe durch eine Vorrichtung zur Übertragung ihrer Drehung gegen die geneigte Achse unabhängig von der Wälzbewegung verbunden ist und wobei mit der dritten Welle die Taumelscheibe mit dem zweiten Drehkörper unmittelbar verbunden ist.

**22.** Differenzwandler der Geschwindigkeit nach Anspruch 21,
**dadurch gekennzeichnet,**
**dass** die Drehübertragungsvorrichtung nach Anspruch 4 ausgebildet ist, dass die Vorrichtung zur Umwandlung der Wälzbewegung in eine Drehbewegung und umgekehrt als Stirnkurve ausgeführt ist, die mit der Wälzscheibe über ein Lager zusammenwirkt, und dass die zweite Welle das Gehäuse des Getriebes ist und mit der Taumelscheibe durch eine Verdrehsicherung bei Beibehaltung der Wälzbewegung verbunden ist.

**23.** Differenzwandler der Geschwindigkeit nach Anspruch 21,
**dadurch gekennzeichnet,**
**dass** die Drehübertragungsvorrichtung nach einem der Ansprüche 7 bis 20 ausgeführt ist und dass alle Wellen als gleichachsig und hohl ausgeführt sind, wobei sie eine koaxiale Konstruktion aus den Rahmen in Form einer Lagervorrichtung bilden.

**24.** Differenzwandler der Geschwindigkeit nach Anspruch 23,
**dadurch gekennzeichnet,**
**dass** die Drehübertragungsvorrichtung nach Anspruch 14 oder 20 ausgebildet ist und dass zusätzliche Wellen eingesetzt sind, die unmittelbar mit den einzelnen Rahmenelementen verbunden sind.

**25.** Differenzwandler der Geschwindigkeit nach Anspruch 23,
**dadurch gekennzeichnet,**
**dass** die Vorrichtung zur Umwandlung der Wälzbewegung der Taumelscheibe in eine Drehung der Welle und umgekehrt als schräge Kurbel ausgeführt ist, auf die die Taumelscheibe über ein Radial-Axial-Vierpunkt-Lager eingesetzt ist.

**26.** Differenzwandler der Geschwindigkeit nach Anspruch 23,
**dadurch gekennzeichnet,**
**dass** die Vorrichtung zur Umwandlung der Wälzbewegung der Taumelscheibe in eine Drehbewegung und umgekehrt als Drehübertragungsvorrichtung nach den Ansprüchen 7 bis 13 ausgeführt ist, dass die Vorrichtung auf der gleichen Taumelscheibe von der Seite, die der Hauptübertragungsvorrichtung gegenüber liegt, angeordnet ist und dass der Rahmen der Vorrichtung unmittelbar mit der ersten Welle verbunden ist.

27. Differenzwandler der Geschwindigkeit nach Anspruch 23,
**dadurch gekennzeichnet,**
**dass** die Vorrichtung zur unabhängigen Übertragung der Drehung der Taumelscheibe ein Kreuzstück aufweist.

28. Differenzwandler der Geschwindigkeit nach Anspruch 23,
**dadurch gekennzeichnet,**
**dass** die Vorrichtung zur unabhängigen Übertragung der Drehung der Taumelscheibe ein Gelenk aufweist.

29. Differenzwandler der Geschwindigkeit nach Anspruch 23,
**dadurch gekennzeichnet,**
**dass** die Vorrichtung zur unabhängigen Übertragung der Drehung der Taumelscheibe ein Kegelzahnradgetriebe aufweist.

30. Differenzwandler der Geschwindigkeit nach Anspruch 23,
**dadurch gekennzeichnet,**
**dass** die Vorrichtung zur unabhängigen Übertragung der Drehung der Taumelscheibe ein Universalgetriebe aufweist.

31. Differenzwandler der Geschwindigkeit nach Anspruch 23,
**dadurch gekennzeichnet,**
**dass** zusätzlich eine koaxiale Drehübertragungsvorrichtung einer zweiten Stufe eingeführt ist, die nach den Ansprüchen 7 bis 19 ausgebildet ist, und die auf der gleichen Taumelscheibe auf derjenigen Seite, die der ersten Drehübertragungsvorrichtung gegenüber liegt, realisiert ist, und dass jede der Drehübertragungsvorrichtungen die Funktion der Vorrichtung zur Übertragung der Drehbewegung der Taumelscheibe an diejenige Welle erfüllt, die unmittelbar mit dem Rahmen der Drehübertragungsvorrichtung verbunden ist.

32. Differenzwandler der Geschwindigkeit nach Anspruch 31,
**dadurch gekennzeichnet,**
**dass** die Vorrichtung zur Umwandlung der Wälzbewegung der Taumelscheibe in eine Drehbewegung und umgekehrt zwei Hohlwellen mit gleichen, schrägen Kurbeln aufweist, die über Lager zwischen den äußeren und inneren Rahmen des Umwandlers von den gegenüberliegenden Kanten eingesetzt sind, und dass die Taumelscheibe auf die Kurbelwellen über die Lager eingesetzt ist.

33. Differenzwandler der Geschwindigkeit nach Anspruch 31,
**dadurch gekennzeichnet,**
**dass** die Vorrichtung zur Umwandlung der Wälzbewegung der Taumelscheibe in eine Drehbewegung und zurück zwei Hohlwellen aufweist, die zwischen den äußeren und inneren Rahmen des Umwandlers von den gegenüberliegenden Kanten eingesetzt sind, und dass die Wellen mit Stirnkurven ausgestattet sind, die mit den Kanten der Taumelscheibe zusammenwirken.

34. Differenzwandler der Geschwindigkeit nach Anspruch 23,
**dadurch gekennzeichnet,**
**dass** koaxial mit der ersten Drehübertragungsvorrichtung zusätzlich eine Drehübertragungsvorrichtung einer zweiten Stufe vorgesehen ist, die nach den Ansprüchen 7 bis 19 ausgebildet und zur ersten Drehübertragungs-vorrichtung so angeordnet ist, dass die Taumelscheiben der beiden Vorrichtungen einander zugewandt sind, dass die Vorrichtung zur Umwandlung der Wälzbewegung der Scheiben in eine Drehbewegung als Hohlwelle ausgeführt ist, die zwischen den Taumelscheiben der beiden Stufen angeordnet ist und die auf den inneren und äußeren Seitenflächen die Taumelbewegung der Scheiben hervorufende Elemente aufweist, und dass die Scheiben der beiden Stufen in der Drehbewegung miteinander verbunden sind, so dass die Drehübertragungsvorrichtung der zweiten Stufe gleichzeitig die Funktion der Übertragung der Drehbewegung der Taumelscheibe an die Welle aufweist, die unmittelbar mit dem Rahmen der Drehübertragungsvorrichtung der zweiten Stufe verbunden ist.

35. Differenzwandler der Geschwindigkeit nach Anspruch 34,
**dadurch gekennzeichnet,**
**dass** die Elemente, die die Taumelbewegung der Scheiben hervorrufen, schräge Kurbeln mit der gleichen Neigung oder mit einer Gegenneigung aufweisen, auf die die Scheiben über die Lager eingesetzt sind.

36. Differenzwandler der Geschwindigkeit nach Anspruch 34,
**dadurch gekennzeichnet,**
**dass** die Elemente, die die Taumelbewegung der Scheiben hervorrufen, auf einander zugewandten Seitenflächen der Hohlwelle und auf jeder der Taumelscheibe als Ringnut und Ringvorsprung ausgebildet sind, die miteinander durch zwei diametral gegenüberliegende Kugeln verknüpft sind, die zwischen den Nutwänden und dem Vorsprung auf gegenüberliegenden Seiten liegen.

**37.** Differenzwandler der Geschwindigkeit nach Anspruch 23,
**dadurch gekennzeichnet,**
**dass** konsequent mit dem ersten Umwandler die Drehübertragungsvorrichtung der zweiten Stufe vorgesehen ist, die nach einem der Ansprüche 7 bis 19 ausgebildet ist, und dass die Taumelscheibe der beiden Stufen durch eine Vorrichtung zur Übertragung der Drehung zwischen parallelen Wellen verbunden ist, wobei die Vorrichtung zur Umwandlung der Wälzbewegung eine synchrone Taumelbewegung der Scheiben sichert.

**38.** Differenzwandler der Geschwindigkeit nach Anspruch 37,
**dadurch gekennzeichnet,**
**dass** die Vorrichtung zur Übertragung der Drehung zwischen den parallelen Wellen als Vorrichtung mit parallelen Kurbeln ausgebildet ist.

**39.** Differenzwandler der Geschwindigkeit nach Anspruch 37,
**dadurch gekennzeichnet,**
**dass** die Vorrichtung zur Übertragung der Drehung zwischen den parallelen Wellen als Vorrichtung mit parallelen Kugelkurbeln ausgebildet ist.

**40.** Differenzwandler der Geschwindigkeit nach Anspruch 37,
**dadurch gekennzeichnet,**
**dass** die Vorrichtung zur Übertragung der Drehung zwischen den parallelen Wellen mit einer Welle und zwei Kreuzstücken versehen ist, die jede der Taumelscheiben mit dieser Welle verknüpfen.

**41.** Differenzwandler der Geschwindigkeit nach Anspruch 40,
**dadurch gekennzeichnet,**
**dass** die Vorrichtung zur Umwandlung der Wälzbewegung von Scheiben in eine Drehbewegung und umgekehrt als Rahmen ausgeführt ist, der an der Achse zwischen den Stufen des Umwandlers angeordnet und mit einem äußeren Ringvorsprung ausgestattet ist, dass der Rahmen mit zwei schrägen, parallelen Kurbeln versehen ist, auf die über Lager die Taumelscheiben eingesetzt sind, und dass der Außenkranz des Ringvorsprungs als ein Element eines Schnecken-Kegel-Zahnrad- oder Reibungsgetriebes ausgebildet ist.

**42.** Differenzwandler der Geschwindigkeit nach Anspruch 23,
**dadurch gekennzeichnet,**
**dass** konsequent mit dem ersten Umwandler eine Drehübertragungsvorrichtung der zweiten Stufe vorgesehen ist, die nach einem der Ansprüche 7 bis 19 ausgebildet ist, und dass die Taumelscheibe der beiden Stufen durch eine Vorrichtung zur Übertragung der Drehung zwischen den geneigten Wellen verbunden ist, wobei die Vorrichtung zur Umwandlung der Wälzbewegung in eine Drehbewegung und umgekehrt eine gegenphasige Taumelbewegung der Scheiben sichert.

**43.** Die Drehübertragungsvorrichtung mit einer Taumelscheibe nach einem der Ansprüche 15 bis 19,
**dadurch gekennzeichnet,**
**dass** die beiden Rahmen mit der Möglichkeit der Taumelbewegung angeordnet und die Taumelscheiben sind.

**44.** Differenzwandler der Geschwindigkeit mit mindestens drei gleichachsigen Hohlwellen, die eine koaxiale Konstruktion aus Rahmen als eine Lagervorrichtung bilden, und mit einer Drehübertragungsvorrichtung nach Anspruch 43, in der die Taumelscheiben mit zwei Wellen durch Vorrichtungen zur Übertragung der Drehung zwischen den geneigten Wellen verbunden sind, wobei mit den anderen Wellen die Taumelscheiben durch die Vorrichtungen zur unabhängigen Umwandlung der Wälzbewegung in eine Drehbewegung und umgekehrt verbunden sind.

**45.** Differenzwandler der Geschwindigkeit nach Anspruch 44,
**dadurch gekennzeichnet,**
**dass** die Vorrichtung zur Umwandlung der Wälzbewegung von Scheiben in eine Drehbewegung zwei koaxiale, miteinander verbundene Hohlwellen aufweist, von denen eine außerhalb der äußeren Taumelscheibe angeordnet und die andere innerhalb der inneren Taumelscheibe angeordnet ist, dass in jedem Paar Hohlwelle und Taumelscheibe auf den einander zugewandten Seitenflächen der Hohlwellen eine Wälzbahn und ein Ringvorsprung vorgesehen sind, die miteinander über zwei diametral gegenüberliegende Kugeln gekoppelt sind, die zwischen den Nutwänden und dem Vorsprung der Gegenseite angeordnet sind, und dass die Kugeln in jedem Paar so angeordnet sind, dass die Scheiben eine Gegenneigung aufweisen.

**46.** Differenzwandler der Geschwindigkeit nach Anspruch 44,
**dadurch gekennzeichnet,**
**dass** die Vorrichtung zur Umwandlung der Wälzbewegung der Scheiben in eine Drehbewegung zwei koaxiale und miteinander verbundene Hohlwellen aufweist, von denen eine außerhalb der äußeren Taumelscheibe angeordnet und die andere innerhalb der inneren Taumelscheibe angeordnet ist, und dass auf den den Taumelscheiben zugewandten Flächen der Hohlwellen schräge Kurbeln mit einer Gegenneigung vorgesehen sind, die mit den Taumelscheiben über Lager zusammenwirken.

**47.** Differenzwandler der Geschwindigkeit nach Anspruch 44,
**dadurch gekennzeichnet,**
**dass** die Vorrichtung zur Umwandlung der Wälzbewegung der Scheiben in eine Drehbewegung aus zwei einzelnen, voneinander unabhängigen Elementen besteht, von denen jedes mit einer einzelnen Welle des Umwandlers verbunden ist.

Fig.1

Fig.2

24

EP 1 462 677 A1

Fig.4

Fig.3

Fig.6

Fig.5

25

Fig.7

Fig.8

Fig.9

Fig.10

Fig.11

Fig.12

Fig.13

Fig.14

Fig.15

Fig.16

Fig.17

Fig.18

Fig.19

Fig.20

Fig.21

$N_1=3$
$N_2=13$
$n=4$
$\varphi=20^0$

Fig.22

$N_1=3$
$N_2=9$
$n=4$
$\varphi=5^0$

Fig.23

Fig.24

Fig.25

Fig.26

Fig.27

31

Fig.28

Fig.29

Fig.30

Fig.31

Fig.32

Fig.33

Fig.34

Fig.35

Fig.36

Fig.37

Fig.38

Fig.39

Fig.40

Fig.41

Fig.42

Fig.43

Fig.44

Fig.45

**Fig.46**

**Fig.47**

**INTERNATIONAL SEARCH REPORT**

| International application No. |
| --- |
| PCT/RU 01/00478 |

| A. CLASSIFICATION OF SUBJECT MATTER **7** |
| --- |

According to International Patent Classification (IPC) or to both national classification and IPC

| B. FIELDS SEARCHED |
| --- |

Minimum documentation searched (classification system followed by classification symbols) **7**

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | WO 83/01666 A1 (TEKRON LICENSING BV) 11 May 1983 (11.05.1983), figures 1-16 | 1-14,15-20,43,21-42, 44-47 |
| A | SU 109419 A (D.S. RABINOVICH) 05/1-1959, figures 1, 2, 5 | 1-14,15-20,21-42 |
| A | GB 636109 A (KENNETH HOWARD NICHOLLS) April 26, 1950, figures 22-27 | 1-6 |
| A | GB 328907 A (BERTRAM VALLANCE) May 5, 1930, figure 1 | 1,7,8,21,29 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 June 2002 (13.06.02)** | **20 June 2002 (20.06.02)** |

| Name and mailing address of the ISA/ **RU** | Authorized officer |
| --- | --- |
| Facsimile No. | Telephone No. |

Form PCT/ISA/210 (second sheet) (July 1992)